# EUROPÄISCHE PATENTSCHRIFT

(11) **EP 4 330 124 B1**
(45) Veröffentlichungstag und Bekanntmachung des Hinweises auf die Patenterteilung: **04.09.2024**
(21) Anmeldenummer: 23711740.3
(22) Anmeldetag: 17.03.2023
(51) Int. Cl.: B62K 23/04, B62M 9/122

(54) **SIGNALGEBER FÜR EINE SCHALTEINRICHTUNG FÜR EIN FAHRRAD**
SIGNAL TRANSMITTER FOR A SWITCHING DEVICE FOR A BICYCLE
GÉNÉRATEUR DE SIGNAUX POUR UN DISPOSITIF DE CHANGEMENT DE VITESSE POUR BICYCLETTE

(30) Priorität: 18.03.2022 DE 102022106451
(43) Veröffentlichungstag der Anmeldung: 06.03.2024
(73) Patentinhaber: Porsche eBike Performance GmbH, 85521 Ottobrunn (DE)
(72) Erfinder: BIECHELE, Johannes, 83083 Riedering (DE)
(74) Vertreter: Patentanwälte Bauer Vorberg Kayser
(86) Internationale Anmeldenummer: PCT/EP2023/056897
(87) Internationale Veröffentlichungsnummer: WO 2023/175148

(56) Entgegenhaltungen:
- WO-A1-2015/161389
- WO-A1-2015/161389
- DE-A1- 102018 210 396
- DE-A1- 102018 210 396
- BMW MOTORRAD: "Bedienungsanleitung BMW Motorrad Audiosystem K1600", 1 January 2011 (2011-01-01), XP055759841, Retrieved from the Internet <URL:https://www.bmw-motorrad.de/de/service/manuals/accessory-manuals.html#/section-weitere-manuals> [retrieved on 20201214]
- BMW MOTORRAD: "Bedienungsanleitung BMW Motorrad Audiosystem K1600", 1 January 2011 (2011-01-01), XP055759841, Retrieved from the Internet <URL:https://www.bmw-motorrad.de/de/service/manuals/accessory-manuals.html#/section-weitere-manuals> [retrieved on 20201214]

## Beschreibung

Die vorliegende Erfindung betrifft einen Signalgeber für eine Schalteinrichtung für ein Fahrrad sowie eine Schalteinrichtung und ein Fahrrad. Die Erfindung betrifft ferner ein Verfahren zur Montage eines Signalgebers sowie ein Verfahren zum Betreiben eines Signalgebers.

Auf dem technischen Gebiet der Fahrräder sind mechanische und elektrische Schalter und Signalgeber lange bekannt. Sie kommen z.B. bei der Steuerung von Gangschaltungen oder Beleuchtungen zum Einsatz.

Signalgeber zeichnen sich dadurch aus, dass sie nur eine Führungsgröße bzw. Steuergröße erzeugen (zur Vereinfachung wird hierin stets von einer "Führungsgröße" gesprochen). Dies kann beispielsweise ein mechanisches oder elektrisches Signal sein oder auch eine Mischung oder Verkettung mechanischer und elektrischer Signale. In der Regel werden solche Signale als Spannungs- oder Stromsignal ausgegeben. Das Signal des Signalgebers beeinflusst dabei ein zu steuerndes oder zu regelndes System, auch Steuer- oder Regelstrecke genannt (zur Vereinfachung wird hierin stets von einer "Steuerstrecke" gesprochen), nicht unmittelbar, sondern beeinflusst ein Stellglied, das wiederum auf die Steuerstrecke wirkt.

Im Bereich der Fahrräder kann hier eine einfache Beleuchtungseinrichtung als Beispiel genannt werden. Die Beleuchtungseinrichtung kann beispielsweise einen Drucktaster als Signalgeber umfassen, der zunächst ein mechanisches Signal auf eine interne Elektronik überträgt. Die Elektronik kann hieraus beispielsweise ein Spannungssignal als Führungsgröße generieren, welche dann wiederum an eine Leistungselektronik als Stellglied zur tatsächlichen Aktivierung oder Deaktivierung einer Lichtquelle als Steuerstrecke weitergeleitet wird.

Schalter wiederum zeichnen sich dadurch aus, dass sie direkt als Stellglied fungieren. Im Fahrradbereich wäre hier exemplarisch eine mechanische Gangschaltung zu nennen, die durch Spannung eines Kabelzugs (als Stellglied) unmittelbar das Fahrradgetriebe (als Steuerstrecke) verstellt. Ebenso kann exemplarisch ein einfacher elektrischer Schalter genannt werden, der eine Stromverbindung unmittelbar öffnet oder schließt.

Im zunehmend populär werdenden Bereich der Elektrofahrräder, beispielsweise E-Bikes oder Pedelecs, wird standardmäßig eine elektrische Energiequelle, z.B. eine Batterie bzw. ein Akkumulator, im Fahrrad vorgesehen. Die darin gespeicherte Energie ermöglicht eine Mechanisierung der bislang rein menschlich verrichteten Arbeit, insbesondere in Form einer Kraftunterstützung beim Treten (Pedelecs). Dies kann jedoch bis hin zum automatischen Antrieb des Fahrrads gehen (E-Bikes).

Im Zuge der Elektrifizierung schreitet im Bereich der Elektrofahrräder auch die Digitalisierung voran, denn durch die elektrische Energiequelle können zusätzliche Funktionen besonders leicht implementiert werden. Zusätzliche Funktionen müssen dann mittels geeigneter Signalgeber, neben den bekannten Standard-Funktionen wie etwa "Hochschalten", "Herunterschalten", "Beleuchtung ein" oder "Beleuchtung aus", bedienbar sein. Zusätzliche Funktionen können rein exemplarisch eine Auswahl von Schaltcharakteristiken, eine Erzeugung zusätzlicher Kommunikationssignale (wie etwa Blinken) oder auch eine Geschwindigkeitsbegrenzungsfunktion umfassen.

Im Ergebnis geht mit der Elektrifizierung und Digitalisierung eine tendenziell zunehmende Funktionsdichte einher, die innerhalb des bei einem Fahrrad begrenzten Bauraums abgebildet werden muss. Natürlich kann eine Funktionsverdichtung auch bei konventionellen Fahrrädern mit geeigneter Energiequelle erfolgen oder bei völlig anderen technischen Systemen, außerhalb des Fahrradbereichs.

Die Schrift WO 2015/161389 A1 zeigt beispielsweise einen Signalgeber als nächstliegenden Stand der Technik, jedoch nur mit einer Drehbewegung und ohne eine Kippbewegung des ringartigen Bedienelements.

Der vorliegenden Erfindung liegt nun die Aufgabe zugrunde, einen Signalgeber für eine Schalteinrichtung für ein Fahrrad vorzuschlagen, der mit geringem Aufwand eine Vielzahl unterschiedlicher Schaltsignale erzeugen kann. Ferner soll ein möglichst einfaches Verfahren zur Montage eines solchen Signalgebers ermöglicht werden. Schließlich ist eine Aufgabe der Erfindung, ein Verfahren zum Betreiben eines Signalgebers, sowie eine Schalteinrichtung für ein Fahrrad, sowie ein Fahrrad vorzuschlagen, mit dem/der eine hohe Funktionsdichte für das Fahrrad mithilfe unterschiedlicher Schaltsignale bei einfacher Bedienung bereitgestellt werden kann.

Die Aufgabe wird durch die Gegenstände der unabhängigen Patentansprüche 1, 10 und 12 gelöst. Bevorzugte Ausgestaltungen der vorliegenden Erfindung ergeben sich aus den in den Unteransprüchen genannten Merkmalen und weiterhin aus der vorliegenden Offenbarung als Ganzes.

Ein erster Aspekt der Erfindung betrifft einen Signalgeber für eine Schalteinrichtung für ein Fahrrad, umfassend eine ringartige Geberbasis und ein ringartiges Bedienelement, das an die ringartige Geberbasis ansetzbar oder angesetzt ist, sodass die ringartige Geberbasis und das ringartige Bedienelement gemeinsam eine Durchgangsöffnung zur Aufnahme einer Lenkstange des Fahrrades bilden, Dabei weist das ringartige Bedienelement wenigstens einen Magneten auf und ist derart eingerichtet, dass das ringartige Bedienelement durch den wenigstens einen Magneten in einer Neutralposition an der ringartigen Geberbasis haltbar ist oder gehalten wird und dass das ringartige Bedienelement, ausgehend von der Neutralposition, zumindest wie folgt bedienbar ist:
- Durchführung einer Drehbewegung des ringartigen Bedienelements relativ zur ringartigen Geberbasis in beliebiger Richtung um eine Längsachse der Durchgangsöffnung, und
- Durchführung einer Kippbewegung des ringartigen Bedienelements relativ zur ringartigen Geberbasis.

Dabei umfasst der Signalgeber ferner wenigstens einen Sensor zur Erzeugung von Gebersignalen, die jeweils einer spezifischen Drehbewegung oder Kippbewegung des ringartigen Bedienelements entsprechen.

Wesentlich ist vorliegend, dass der erfindungsgemäße Signalgeber einen Basisring und einen relativ dazu beweglichen Bedienring umfasst, wobei der Bedienring vorzugsweise konzentrisch auf dem Basisring angeordnet ist. Auf diese Weise kann die Lenkstange des Fahrrads durch den Basisring und den Bedienring geschoben werden. Der Bedienring wird magnetisch an dem Basisring in einer neutralen Ausgangslage gehalten. In dieser Ausgangslage ist der Bedienring in weiterhin bevorzugt konzentrischer Anordnung gegenüber dem Basisring verdrehbar und/oder gegenüber dem Basisring verkippbar. Je nach Bewegung des Bedienrings erzeugt ein Sensor ein hierfür spezifisches Gebersignal, das als Führungsgröße zur Steuerung einer bestimmten Funktion verwendbar ist.

Zur sprachlichen Vereinfachung wird hierin gelegentlich weiterhin von "Basisring" oder "Bedienring" gesprochen, wobei stets die ringartige Geberbasis bzw. das ringartige Bedienelement gemeint sind.

Die mit den spezifischen Gebersignalen als Führungsgröße steuerbaren Funktionen können rein exemplarisch umfassen: Hochschalten, Herunterschalten, Beleuchtung einschalten, Beleuchtung ausschalten, Beleuchtung dimmen, Auswahl einer Schaltcharakteristik für die Schalteinrichtung, Erzeugung eines visuellen und/oder akustischen Kommunikationssignals, Aktivierung oder Deaktivierung oder auch Einstellung einer Geschwindigkeitsbegrenzung. Hier sind viele weitere Funktionen denkbar, die im Fahrrad-Bereich oder auch im Nicht-Fahrradbereich nützlich sein können.

Vorzugsweise umfasst der Bedienring an seinem Außenumfang einen Bedienabschnitt, der eine sichere und komfortable Bedienaktion (Drehen und/oder Kippen des Bedienrings durch den Fahrer) aus der Neutralposition heraus, vorzugsweise mit dem Daumen, ermöglicht. Der Bedienabschnitt kann vorzugsweise vom Außenumfang abstehen, beispielsweise als Bediennase. Er kann aber auch in den Außenumfang eingelassen sein, beispielsweise als Bedienmulde.

Der Signalgeber der Erfindung ermöglicht die Erzeugung einer Vielzahl unterschiedlicher Gebersignale. Mindestens sind jedoch drei Gebersingale erzeugbar, nämlich - in Blickrichtung auf die Durchgangsöffnung gesehen - durch Drehung des Bedienrings nach links, durch Drehung des Bedienrings nach rechts sowie durch Kippen des Bedienrings in eine bestimmte Richtung. Je nach Art des Sensors und der Art und Weise, auf welche eine weitere Verarbeitung seiner Gebersignale, beispielsweise durch ein Steuergerät des Fahrrads, erfolgt, können sowohl diskrete als auch kontinuierliche Gebersignale erzeugbar und verarbeitbar sein.

Diskrete Gebesingale können beispielsweise als logische 0 oder 1, ausgedrückt durch ein Spannungs- oder Stromsignal, vorliegen. Ein solches Gebersignal kann beispielsweise einem Zustand des Bedienrings entsprechen, der entweder verkippt ist oder nicht verkippt ist. Beispielsweise kann der Bedienring auch in mehreren Richtungen verkippbar sein. Exemplarisch könnte ein solches diskretes Gebersignal wie folgt lauten: "Kipprichtung 1 = 1; Kipprichtung 2 = 0; verkippt = 1". Dies könnte beispielsweise einer Kippbewegung in eine erste Richtung entsprechen.

Kontinuierliche Gebersignale können beispielsweise innerhalb eines Bereichs eines Spannungs- oder Strompegels vorliegen, rein exemplarisch zwischen 0 V und 5 V. Ein solches kontinuierliches Gebersignal kann neben einer Kipp- und/oder Drehrichtung beispielsweise auch einem Grad der Kipp- und/oder Drehbewegung entsprechen. Exemplarisch könnte ein solches kontinuierliches Gebersignal wie folgt lauten: Drehrichtung 1 = 0; Drehrichtung 2 = 1; Drehung = 2,5 V. Dies könnte beispielsweise einer schwachen Drehbewegung in eine zweite Richtung entsprechen. Ein Wert "Drehung = 5 V" könnte hingegen einer starken Drehbewegung entsprechen.

Somit lässt sich mit dem erfindungsgemäßen Signalgeber eine nahezu beliebige Vielzahl von spezifischen Gebersignalen mit geringem Aufwand erzeugen.

Zugleich ist der erfindungsgemäße Signalgeber einfach aufgebaut und kompakt, da er bereits mit nur zwei relativ zueinander beweglichen Teilen oder Baugruppen, nämlich dem ringartigen Bedienelement und der ringartigen Geberbasis, auskommt. Der erfindungsgemäße Signalgeber ist zudem sehr robust und mit geringem Aufwand herstellbar. Empfindliche Komponenten wie der Sensor oder der Magnet können vorzugsweise im ringartigen Bedienelement oder der ringartigen Geberbasis integriert sein, besonders bevorzugt darin gekapselt sein. Das ringartigen Bedienelement und die ringartigen Geberbasis können vorzugsweise zumindest teilweise aus Kunststoff hergestellt sein.

Besonders vorteilhaft ist die intuitive Bedienbarkeit des erfindungsgemäßen Signalgebers. Ist dieser bestimmungsgemäß an der Lenkstange montiert, so kann - in vorwärts gerichtete Fahrtrichtung gesehen - der Bedienring beispielsweise zum Hochschalten nach vorne gedreht werden (vom Fahrer weg) und zum Herunterschalten nach hinten gedreht werden (zum Fahrer hin). Eine Bewegungscharakteristik des Bedienrings kann, beispielsweise unter Verwendung einer Bewegungsbegrenzung, den Charakter einer "durch Antippen bedienbaren Schaltung" aufweisen. Dies ist nicht nur haptisch angenehm, sondern unterstützt zugleich die schnelle und sichere Erzeugung eindeutiger Gebersignale durch kurze und prägnante Bedienwege. Durch die ringartige Form des Bedienelements ist auch ein besonders schneller Wechsel zwischen den Dreh- und Kippbewegungen ohne Umgreifen möglich. Für den Fahrer ergibt sich somit eine geringere Beanspruchung, was ein höheres Maß an Konzentration auf das eigentliche Fahren ermöglicht. Somit erhöht der Signalgeber der Erfindung auch die Sicherheit eines damit ausgestatteten Fahrrads signifikant. Sowohl die Dreh- als auch die Kippbewegungen können vorteilhaft mit dem Daumen durchführbar sein, ohne dass hierzu etwa ein Umgreifen notwendig wäre.

Im Folgenden soll auf die Kinematik und Sensorik des erfindungsgemäßen Signalgebers näher eingegangen werden. Zunächst wird angemerkt, dass im Falle des Verkippens des Bedienrings dieser streng genommen nicht mehr konzentrisch mit dem Basisring angeordnet ist. Im Kontext der Erfindung gilt der Bedienring aber solange als konzentrisch mit dem Basisring angeordnet, wie die Lenkstange bestimmungsgemäß durch die gemeinsam gebildete Durchgangsöffnung geführt sein kann. Die Lenkstange kann beispielsweise einen Durchmesser von 20 mm bis 25 mm haben, vorzugsweise 22 mm bis 24 mm. Besonders bevorzugt kann der Durchmesser 22,2 mm oder 23,5 mm betragen. Ein Innendurchmesser der ringförmigen Geberbasis und ein Innendurchmesser des ringförmigen Bedienelements können hierzu korrespondieren und mit einer entsprechenden Toleranz passend ausgebildet sein. Vorzugsweise ist der Innendurchmesser des Basisrings etwas enger als der Innendurchmesser des Bedienrings, damit die Lenkstange durch den Basisring sicher geführt wird und der Bedienring zugleich die gewünschte Beweglichkeit zum Drehen und Kippen aufweisen kann. Vorzugsweise ist der Innendurchmesser des Bedienrings derart mit einer Toleranz ausgebildet, dass dieser um bis zu 10° verkippbar eingerichtet ist, wenn die Lenkstange sich in der gemeinsamen Durchgangsöffnung befindet. Beispielsweise kann der Bedienring um bis zu 9°, 8°, 7°, 6°, 5°, 4°, 3°, 2° oder 1° verkippbar eingerichtet sein. Grundsätzlich ist auch eine Verkippung um einen größeren Winkel denkbar.

Die Verkippung um einen angegebenen Winkel kann derart gemessen werden, dass eine durch die beiden zueinander gerichteten Grundflächen, einmal des ringförmigen Bedienelements und einmal der ringartigen Geberbasis, ausgebildeten Ebenen ohne ein Verkippen des ringförmigen Bedienelements im Wesentlichen parallel zueinander verlaufen. Wird der Bedienring nun gegenüber dem Basisring um einen angegebenen Winkel verkippt, so verläuft sodann die durch jene Grundfläche des Bedienrings ausgebildete Ebene um jenen Winkel verkippt gegenüber der statisch verbleibenden Ebene, welche durch jene Grundfläche des Basisrings ausgebildet ist.

Gemäß einer Ausführungsform ist das ringförmige Bedienelement um bis zu 5,5° verkippbar eingerichtet. Eine solche Bewegungsbegrenzung kann für die Kippbewegung im Fahrradbereich einen guten Wert darstellen, um einen haptisch deutlich wahrnehmbaren und zugleich kurzen und prägnanten Schaltweg in der Kippbewegung zu gewährleisten.

Bezüglich der Drehbewegung und/oder Kippbewegung kann eine Bewegungsbegrenzung beispielsweise auch durch geeignete Anschläge zwischen Basis- und Bedienring realisiert werden, wenn der Bedienring am Basisring angesetzt ist.

Hinsichtlich der Drehbewegung ist der Bedienring vorzugsweise um bis zu 40° in eine oder beide Richtungen verdrehbar. Beispielsweise kann der Bedienring um bis zu 35°, 30°, 25°, 20°, 15°, 10° oder 5° verdrehbar sein. Auch größere Drehwinkel sind denkbar.

Die Verdrehung um einen angegebenen Winkel kann derart gemessen werden, dass aus einer Blickrichtung auf die Durchgangsöffnung gesehen aus einer Neutralposition heraus der Bedienring wenigstens in eine Richtung (in der genannten Blickrichtung nach links oder rechts) oder bevorzugt in beide Richtungen um den angegebenen Winkel verdreht werden kann. Lediglich zur Veranschaulichung sei angemerkt, dass eine Verdrehung in Blickrichtung auf die Durchgangsöffnung gesehen nach rechts um 360° demnach einer Drehung einer vollständigen Runde des Bedienrings bis zurück in seine Ausgangslage entsprechen würde.

Gemäß einer Ausführungsform ist das ringförmige Bedienelement um bis zu 30,0° in beide Drehrichtungen drehbar. Eine solche Bewegungsbegrenzung für die Drehbewegung kann im Fahrradbereich einen optimalen Wert darstellen, um einen haptisch deutlich wahrnehmbaren und zugleich kurzen und prägnanten Schaltweg in der Drehbewegung zu gewährleisten.

Zu allen oben genannten Dreh- und Kippwerten werden auch alle Zwischenwerte in Bezug auf die Erfindung offenbart, sofern der Basisring, der Bedienring und die Bewegungsbegrenzung im Rahmen der Toleranzen bekannter Herstellungsverfahren entsprechend realisierbar sind, um die möglichen Dreh- oder Kippbewegung entsprechend zu dimensionieren. Dies gilt auch für beliebige Intervalle, die durch die offenbarten Werte und ihre Zwischenwerte gebildet werden können.

Der Bedienring ist, wie ausgeführt, am Basisring ansetzbar. "Ansetzbar" bedeutet, dass der Signalgeber der Erfindung auch als System seiner Einzelteile betrachtet werden kann und beispielsweise zum Zweck des Transports als Bausatz vorliegen kann.

Ist der Bedienring am Basisring angesetzt, steht zumindest eine Ansatzfläche der ringartigen Geberbasis mit einer Anlagefläche des ringartigen Bedienelements in Kontakt. Im Sinne der Erfindung beinhaltet "angesetzt sein" zwar einen physischen Kontakt, nicht zwingend aber eine selbsthaltende Verbindung. Zum Testen des Signalgebers vor einer Endmontage am Fahrrad kann der Bedienring beispielsweise im Sinne einer Vormontage auch am Basisring angesetzt werden und dort manuell und/oder durch den Magneten gehalten werden. Diese erhöht die Sicherheit, dass der Signalgeber nach der (End-)Montage am Fahrrad bestimmungsgemäß funktioniert. Eine selbsthaltende Verbindung kann aber durchaus auch vor der Montage am Fahrrad realisiert werden. Dies kann z.B. über den Magneten erfolgen, der zu diesem Zweck stark genug ausgelegt ist, um den Bedienring am Basisring zu halten. Es können auch zusätzliche Magnete verwendet werden, die diesen Zweck zumindest in Summe erfüllen. Die selbsthaltende Verbindung kann auch durch die in der gemeinsamen Durchgangsöffnung angeordnete Lenkstange unterstützt oder erreicht werden, indem die Lenkstange zumindest indirekt verhindert, dass der Bedienring vollständig vom Basisring abkippen kann. Nach Bedarf können auch zusätzliche Verbindungsmittel vorgesehen sein können, wie etwa Verbindungsstrukturen am Basis- und Bedienring.

Wie oben ausgeführt, ist der Bedienring durch den Magneten am Basisring in der Neutralposition haltbar. Dies umfasst insbesondere, dass der Bedienring durch die Bedienaktion des Fahrers (Drehen und/oder Kippen) aus der Neutralposition herausbewegt werden kann und der Magnet dazu in der Lage ist, den Bedienring nach Wegfall der Bedienaktion wieder in die Neutralposition zurückzubewegen. Dies umfasst insbesondere auch, dass der Bedienring in der Neutralposition gehalten wird, solange keine Bedienaktion erfolgt. Demnach können der Magnet oder die Magnete derart ausgelegt sein, dass er/sie den Bedienring sowohl am Basisring angesetzt als auch in der Neutralposition hält/halten.

Bezüglich der Dreh- und Kippbewegung kann anschaulich davon ausgegangen werden, dass der Basisring und der Bedienring jeweils ein körpereigenes Koordinatensystem aufweisen. Dies ist kein physisches Merkmal, sondern wird für eine anzustellende Betrachtung zweckmäßig definiert. Im Kontext der vorliegenden Offenbarung wird daher davon ausgegangen, dass eine X-Y-Ebene des Basisrings in einer Durchgangsöffnung des Basisrings und eine X-Y-Ebene des Bedienrings in einer Durchgangsöffnung des Bedienrings liegen. Eine Z-Achse des Basisrings bildet eine Längsachse der Durchgangsöffnung des Basisrings und eine Z-Achse des Bedienrings bildet eine Längsachse der Durchgangsöffnung des Bedienrings. Ist die Anlagefläche des Bedienrings bestimmungsgemäß an der Ansatzfläche des Basisrings angesetzt und befindet sich der Bedienring gegenüber dem Basisring in der Neutralposition (nicht gedreht/nicht gekippt), sind die Z-Achsen kollinear angeordnet und verlaufen durch die dann gemeinsam gebildete Durchgangsöffnung des Signalgebers. Sie verlaufen somit in der Neutralposition auch kollinear zu einer Längsachse der gemeinsam gebildete Durchgangsöffnung und bilden eine Z-Achse des Signalgebers insgesamt. Bestimmungsgemäß können sie somit auch kollinear zu einer Längsachse der Lenkstange verlaufen, wenn diese in der gemeinsamen Durchgangsöffnung angeordnet ist. X- und Y-Achsen der körpereigenen Koordinatensysteme des Bedienrings und des Basisrings, welche beiden Achsen die jeweilige X-Y-Ebene des Bedienrings bzw. Basisrings aufspannen, sind dabei parallel oder kollinear zueinander angeordnet.

Eine reine Drehbewegung des Bedienrings kann aus der Neutralposition erfolgen, indem die X- und Y-Achse des Bedienrings aus ihrer zu der X- und Y-Achse des Basisrings parallelen oder kollinearen Lage herausbewegt werden und dabei die Z-Achsen des Bedien- und Basisrings weiterhin kollinear angeordnet bleiben.

Eine reine Kippbewegung des Bedienrings kann aus der Neutralposition heraus erfolgen, indem die Z-Achse des Bedienrings gegenüber der Z-Achse des Basisrings geneigt wird, ohne dass dabei die Ursprünge der Koordinatensysteme des Bedienrings und des Basisrings aus ihrer bisherigen Relativlage herausbewegt werden. Je nach Richtung der Kippbewegung kann dabei die X-Achse und/oder die Y-Achse des Bedienrings gegenüber der X-Achse bzw. der Y-Achse des Basisrings aus ihrer parallelen oder kollinearen Lage herausbewegt werden.

Die Drehbewegung und die Kippbewegung können entsprechend auch überlagert (superponiert) ausgeführt werden. Vorzugsweise erfolgt jedoch eine Bewegungstrennung, sodass entweder die Drehbewegung oder die Kippbewegung ausgeführt werden kann.

Es sei angemerkt, dass hierin grundsätzlich von bestimmungsgemäßen Bewegungen ausgegangen wird, die in Folge einer Bedienaktion auftreten und die zur Erzeugung des spezifischen Gebersignals groß genug sind, sodass sie eine hinreichende Detektierbarkeit durch den Sensor gewährleisten. Wie bei mechanischen Systemen üblich können toleranzbedingt andere Bewegungen in kleineren Bereichen möglich sein.

Als Sensor oder Sensoren zur Erzeugung der spezifischen Gebersingale kann beispielsweise ein magnetsensitiver Sensor oder auch ein optischer Sensor vorgesehen sein. Rein exemplarisch kann bei einem magnetsensitiven Sensor die Veränderung eines Magnetfeldes repräsentativ für eine bestimmte Bewegung sein. Beispielsweis kann wenigstens ein Magnet im Bedienring vorgesehen sein und wenigstens ein magnetsensitiver Sensor im Basisring. Bei einem optischen Sensor kann rein exemplarisch die Veränderung einer Lichtintensität repräsentativ für eine bestimmte Bewegung sein. Beispielsweis kann wenigstens eine Quelle wenigstens einer Wellenlänge im Bedienring vorgesehen sein und wenigstens ein Empfänger für wenigstens eine Wellenlänge im Basisring (oder umgekehrt). Auch kann der Bedienring einen Reflektor umfassen und sowohl die Quelle als auch der Empfänger können im Basisring angeordnet sein. Es können beispielsweise auch Magnete spezifischer Stärke oder spezifische Wellenlängen verwendet werden, um Drehbewegungen oder Kippbewegungen oder auch deren Richtung zu unterscheiden. Dies kann auch mit einer Mehrzahl von Sensoren realisiert werden. Prinzipiell kommen unterschiedliche Sensoren in Betracht, die in der Lage sind, die oben beschriebenen relativen Dreh- und/oder Kippbewegungen in hierfür spezifische Gebersignale umzusetzen.

Die Sensoren sind dabei vorzugsweis so ausgelegt, dass bestimmungsgemäße Bewegungen erkannt werden und lediglich toleranzbedingte Bewegungen ausgefiltert werden. Dies erfolgt vorzugsweise über einen Mindestsignalpegel oder Rauschfilter.

In bevorzugter Ausgestaltung des Signalgebers der Erfindung ist vorgesehen, dass die ringartige Geberbasis einen Führungsabschnitt umfasst und das ringartige Bedienelement einen führbaren Abschnitt umfasst, der komplementär zu dem Führungsabschnitt ausgebildet ist. Dabei steht der Führungsabschnitt derart mit dem führbaren Abschnitt in Wechselwirkung, wenn das ringartige Bedienelement an die ringartige Geberbasis angesetzt ist, dass wenigstens folgende Bedingung/-en erfüllt ist/sind:
- während der Durchführung der Drehbewegung des ringartigen Bedienelements relativ zur ringartigen Geberbasis, ausgehend von der Neutralposition, ist im Wesentlichen keine Kippbewegung möglich, und/oder
- während der Durchführung der Kippbewegung des ringartigen Bedienelements relativ zur ringartigen Geberbasis, ausgehend von der Neutralposition, ist im Wesentlichen keine Drehbewegung möglich.

Mit anderen Worten erfolgt hier die zuvor angesprochene Bewegungstrennung, beispielsweise durch geeignete Anschläge am Führungsabschnitt und führbaren Abschnitt, die vorzugsweise auch zur Bewegungsbegrenzung verwendet werden können. Auch hier versteht sich, dass die Formulierungen "im Wesentlichen keine Kippbewegung" und "im Wesentlichen keine Drehbewegung" darauf abstellen, dass nur bestimmungsgemäße bzw. detektierbare Bewegungen zugelassen werden sollen. Dies schließt nicht aus, dass toleranzbedingt auch andere Bewegungen in kleinen Bereichen erfolgen können.

Der Führungsabschnitt und der führbare Abschnitt können vorzugsweise auch dazu beitragen, den Bedienring konzentrisch zum Basisring anzuordnen, wodurch der Führungsabschnitt und der führbare Abschnitt nicht nur als Bewegungstrennung bzw. -begrenzung, sondern auch als Verbindungsstrukturen dienen. Beispielsweise kann der Führungsabschnitt kragenartig, stutzenartig oder flanschartig ausgebildet sein. Der Führungsabschnitt kann beispielsweise die Ansatzfläche aufweisen und einen von dieser entlang der Z-Achse abstehenden Führungsstutzen. Der Führungsstutzen kann beispielsweise an der Formung der Durchgangsöffnung des Basisrings beteiligt sein und beispielsweise den Innendurchmesser des Basisrings aufweisen. Der Führungsstutzen kann dementsprechend auch zur Aufnahme der Lenkstange bestimmt sein. Der führbare Abschnitt des Bedienrings kann dementsprechend beispielsweise an der Formung der Durchgangsöffnung des Bedienrings beteiligt sein und beispielsweise den Innendurchmesser des Bedienrings aufweisen. Dieser ist dann vorzugsweise etwas größer als ein Außendurchmesser des Führungsstutzens. Somit kann der Bedienring konzentrisch auf den Führungsstützen geschoben werden und derart mit einer Toleranz ausgebildet sein, dass er das nötige Spiel zur Durchführung der Kipp- und Drehbewegungen aufweist, wie zuvor erläutert. Zugleich kann der führbare Abschnitt die Anlagefläche aufweisen, die mit der Ansatzfläche in Kontakt stehen kann.

Auf diese Weise wird in äußerst kompakter Bauweise und insbesondere mit einer kleinen Zahl an beweglichen Einzelteilen bzw. Baugruppen ein breites funktionales Spektrum hinsichtlich der Montage und der Bedienung des Signalgebers der Erfindung abgedeckt.

In bevorzugter Ausgestaltung des Signalgebers der Erfindung ist vorgesehen, dass der führbare Abschnitt an einer Stirnfläche des ringartigen Bedienelements eine in zwei unterschiedlich tiefen Ebenen verlaufende Aussparung umfasst, wobei die zwei unterschiedlich tiefen Ebenen als eine Flachebene und als eine Tiefebene ausgebildet sind. Dabei ist der Führungsabschnitt mit der Aussparung derart in Eingriff bringbar oder in Eingriff gebracht, dass die Aussparung:
- auf der Flachebene die Drehbewegung begrenzt sowie die Kippbewegung verhindert, und/oder
- auf der Tiefebene die Drehbewegung verhindert sowie die Kippbewegung begrenzt.

Im montierten Zustand des Signalgebers ist die genannte Stirnfläche des ringartigen Bedienelements vorzugsweise vom Basisring abgewandt und liegt vorzugsweise gegenüber von der zuvor beschriebenen Anlagefläche des führbaren Abschnitts. Die Anlagefläche ist dann im montierten Zustand dem Basisring entsprechend zugewandt und liegt an diesem bzw. dessen Ansatzfläche an. Bezogen auf die Z-Achse des ringartigen Bedienelements kann dies auch wie folgt ausgedrückt werden: Liegt der Koordinatenursprung des Koordinatensystems des Bedienrings zwischen dessen Stirnfläche und dessen Anlagefläche, so befindet sich die Stirnfläche an einer positiven Z-Koordinate und die Anlagefläche an einer negativen Z-Koordinate.

Die Tiefebene ist bezüglich der Z-Koordinate tiefer als die Flachebene. Mit anderen Worten erstreckt sich die Tiefebene von der Stirnfläche aus weiter in negative Z-Richtung als die Flachebene. Die Tiefebene kann sich vorzugsweise von einem Grund der Flachebene aus weiter in negative Z-Richtung erstrecken.

Funktional betrachtet kann somit der Führungsabschnitt mit dem führbaren Abschnitt interagieren, sodass einerseits über den Grund der Flachebene gleitend eine Drehbewegung um die Z-Achse ermöglicht wird und der Grund als Anschlag zugleich eine Kippbewegung verhindert (Bewegungstrennung). Die Drehbewegung wird dabei vorzugsweise durch Seitenwände der Flachebene als Anschläge begrenzt (Bewegungsbegrenzung). Alternativ kann der Führungsabschnitt mit dem führbaren Abschnitt auch derart interagieren, dass eine Kippbewegung bis auf einen Grund der Tiefebene als Anschlag ermöglicht wird (Bewegungsbegrenzung) und dabei vorzugsweise eine Drehbewegung durch Seitenwände der Tiefebene als Anschläge verhindert wird (Bewegungstrennung).

Somit wird mit geringer struktureller Komplexität die Bewegungsbegrenzung und die Bewegungstrennung hinsichtlich der Dreh- und Kippbewegungen erreicht. Dies ist besonders vorteilhaft, um beispielsweise den Daumen des Fahrers sicher zu führen und eindeutig definierte Bewegungen zur Erzeugung der hierfür spezifischen Gebersignale zu gewährleisten.

In bevorzugter Ausgestaltung des Signalgebers der Erfindung ist vorgesehen, dass die ringartige Geberbasis einen/den Führungsabschnitt umfasst und das ringartige Bedienelement einen/den führbaren Abschnitt umfasst, der komplementär zu dem Führungsabschnitt ausgebildet ist. Dabei steht der Führungsabschnitt derart mit dem führbaren Abschnitt in Wechselwirkung, wenn das ringartige Bedienelement an die ringartige Geberbasis angesetzt ist, dass der Führungsabschnitt das ringartige Bedienelement entlang der Längsachse der Durchgangsöffnung sichert, wenn die Lenkstange des Fahrrades in der Durchgangsöffnung aufgenommen ist.

Zu diesem Zweck kann der Führungsabschnitt beispielsweise einen Sicherungsabschnitt umfassen, der vor der Stirnfläche des Bedienrings angeordnet ist, wenn der Signalgeber auf der Lenkstange montiert ist. Anknüpfend an das zuvor genannte Beispiel, in dem sich die Stirnfläche an einer positiven Z-Koordinate und die Anlagefläche an einer negativen Z-Koordinate befindet, wäre der Sicherungsabschnitt dann an einer gegenüber der Stirnfläche noch weiter ins Positive verschobenen Z-Koordinate angeordnet.

Der Führungsabschnitt übernimmt somit als weitere Funktion die axiale Sicherung des Bedienrings am Basisring entlang der Z-Achse bzw. der Längsachse der gemeinsam gebildeten Durchgangsöffnung.

In bevorzugter Ausgestaltung des Signalgebers der Erfindung ist vorgesehen, dass der Führungsabschnitt eine Sicherungsnase umfasst, die zwischen einer Sicherungsposition und einer Montageposition verlagerbar ist, wobei die Sicherungsnase in der Montageposition zumindest abschnittsweise in die Durchgangsöffnung ragt und in der Sicherungsposition vollständig außerhalb der Durchgangsöffnung angeordnet ist. Ferner ist dabei, wenn das ringartige Bedienelement an die ringartige Geberbasis angesetzt ist und sich die Sicherungsnase in der Sicherungsposition befindet, der führbare Abschnitt entlang der Längsachse zumindest abschnittsweise zwischen der Sicherungsnase und der ringartigen Geberbasis angeordnet. Ferner ist dabei, wenn das ringartige Bedienelement an die ringartige Geberbasis angesetzt ist und die Lenkstange des Fahrrades in der Durchgangsöffnung aufgenommen ist, die Sicherungsnase durch die Lenkstange in die Sicherungsposition gedrängt.

Die Sicherungsnase kann zu dem oben angesprochenen Sicherungsabschnitt gehören oder diesen bilden. Prinzipiell kann die Verlagerung der Sicherungsnase gelenkig oder elastisch erfolgen.

Vorzugsweise ist die Sicherungsnase elastisch gelagert und Bestandteil des vorzugsweise strukturelastischen Sicherungsabschnitts des Führungsabschnitts. Vorzugsweise ist der Sicherungsabschnitt mit der Sicherungsnase integraler Bestandteil des Führungsabschnitts. Besonders bevorzugt ist die Sicherungsnase unter elastischer Deformation des Sicherungsabschnitts aus der Sicherungsposition in die Montageposition verlagerbar, was im Umkehrschluss einen gewissen Selbsthalteeffekt der Sicherungsnase in der Sicherungsposition impliziert. Somit besteht eine gewisse Vorsicherung, auch ohne dass die Lenkstange durch die Durchgangsöffnung geführt ist. Dies kann beispielsweise die Vormontage des Bedienrings am Basisring erleichtern, bevor die eigentliche Sicherung durch die Endmontage auf der Lenkstange erfolgt. Die Endmontage erfolgt, indem die Lenkstange in der Durchgangsöffnung angeordnet wird und dabei die elastische oder ggf. gelenkige Verlagerung der Sicherungsnase in die Durchgangsöffnung unterbunden wird.

In bevorzugter Ausgestaltung des Signalgebers der Erfindung ist vorgesehen, dass in der ringartigen Geberbasis und dem ringartigen Bedienelement jeweils wenigstens ein Magnet derart angeordnet ist, dass durch deren Wechselwirkung das ringartige Bedienelement in der Neutralposition gehalten wird.

Jeweils ein Magnet im Basisring und im Bedienring können auch als Magnetpaar betrachtet werden. Vorzugsweise kann eine Vielzahl von Magneten oder Magnetpaaren im Bedienring und im Basisring vorgesehen sein, besonders bevorzugt in regelmäßigen Abständen.

Dies ist förderlich für eine einfache Montage des Basisrings mit dem Bedienring sowie für eine sichere Haltung des Bedienrings in der Neutralposition bzw. für eine sichere Rückführung in die Neutralposition nach einer Bedienaktion. Besonders bevorzugt können zwei, drei, vier oder auch mehr Magnete oder Magnetpaare vorgesehen sein.

Einer oder mehrere solcher Magnete können auch mit dem wenigstens einen Sensor oder mehreren Sensoren zur Erzeugung der Gebersingale wechselwirken.

Besonders vorteilhaft an der Verwendung von Magneten ist, wenn diese auch dem Halten des Bedienrings in der Neutralstellung gegenüber dem Basisring dient, dass das Schaltgefühl für den Fahrer besonders bedienerfreundlich ist. So können in der Neutralstellung der Bedienring und der Basisring mit einer maximalen Magnetkraft zusammengehalten werden (Zusammenhaltekraft). Sobald der Fahrer etwa hoch- oder herunterschalten möchte, muss jene maximale Magnetkraft (Zusammenhaltekraft) überwunden werden. Die Zusammenhaltekraft wird im Laufe der Bewegung jedoch immer geringer, da die beiden korrespondierenden Magneten immer weiter voneinander weg entfernt werden. Es ergibt sich für den Fahrer also ein besonders intensives, "knackiges" Schaltgefühl bei Beginn der Schaltbewegung, während im Laufe der Schaltbewegung die aufzuwendende Kraft immer weiter abnimmt. Dies ist gegenteilig zu üblichen mechanischen Schaltungen, bei denen der Fahrer regelmäßig zum Ende der Schaltbewegung und zur finalen Realisierung des Schaltvorgangs die höchste Kraft bzw. zumindest eine höhere Kraft als zu Beginn der Schaltbewegung aufwenden muss.

In bevorzugter Ausgestaltung des Signalgebers der Erfindung ist vorgesehen, dass der wenigstens eine Sensor als magnetsensitiver Sensor ausgebildet und in der ringartigen Geberbasis angeordnet ist, wobei der magnetsensitive Sensor durch wenigstens einen/den dem ringartigen Bedienelement zugeordneten Magneten zur Erzeugung von spezifischen Gebersignalen anregbar ist, wenn das ringartige Bedienelement ausgehend von der Neutralposition eine Drehbewegung in eine erste Richtung, eine Drehbewegung in eine zweite Richtung oder eine Kippbewegung ausführt.

Der magnetsensitive Sensor erzeugt also die Gebersingale, die jeweils einer spezifischen Drehbewegung oder Kippbewegung des ringartigen Bedienelements entsprechen. Der Signalgeber der Erfindung kann hierzu auch mehrere, beispielsweise zwei oder drei, solcher magnetsensitiven Sensoren umfassen. Beispielsweise kann jeweils einer der drei magnetsensitiven Sensoren zur Erkennung der Drehbewegung in die erste Richtung, in die zweite Richtung sowie für die Kippbewegung vorgesehen sein.

Dies kann vorzugsweis durch einen Hall-Sensor erreicht werden, der als Maß für die jeweilige Bewegung eine Hall-Spannung ausgibt. Weitere magnetsensitive Sensoren sind dem Fachmann bekannt.

Es kann aber prinzipiell bereits mit einem magnetsensitiven Sensor die Drehbewegung in die erste Richtung, in die zweite Richtung sowie die Kippbewegung erkannt werden. Hierzu können beispielsweise unterschiedlich starke Magnete vorgesehen werden. Bezogen auf eine Rotationsposition um die Längsachse der gemeinsamen Durchgangsöffnung sind diese unterschiedlich starken Magnete dann, ausgehend von der Neutralposition des Bedienrings, beispielsweise in positiv und negativ versetzter Rotationsposition im Bedienring angeordnet, gegenüber dem an neutraler Rotationsposition im Basisring angeordneten magnetsensitiven Sensor.

Wird der Bedienring dann in die erste Richtung, beispielsweise rechtsherum, um die Z-Achse gedreht, bewegt sich beispielsweise der stärkere Magnet auf den magnetsensitiven Sensor zu und der schwächere Magnet bewegt sich vom magnetsensitiven Sensor weg. Der magnetsensitive Sensor ist somit überwiegend dem stärkeren Magnetfeld des stärkeren Magneten ausgesetzt. Wird hingegen der Bedienring in die zweite Richtung, in diesem Beispiel also linksherum, um die Z-Achse gedreht, bewegt sich der schwächere Magnet auf den magnetsensitiven Sensor zu und der stärkere Magnet bewegt sich vom magnetsensitiven Sensor weg. Der magnetsensitive Sensor ist somit überwiegend dem schwächeren Magnetfeld des schwächeren Magneten ausgesetzt. Die unterschiedlich starken Magnetfelder lassen so eine eindeutige Unterscheidung zwischen der ersten und zweiten Richtung zu. Wird der Bedienring beispielsweise gekippt, bewegen sich sowohl der stärkere als auch der schwächere Magnet auf den magnetsensitiven Sensor zu oder von diesem weg, je nach Kipprichtung und Position der Magnete und des magnetsensitiven Sensors. Hier wird exemplarisch davon ausgegangen, dass sich beide Magnete in Folge der Kippbewegung vom magnetsensitiven Sensor wegbewegen. Der magnetsensitive Sensor ist somit infolge der Kippbewegung in vermindertem Ausmaß einem resultierenden Magnetfeld des stärkeren und schwächeren Magneten ausgesetzt. Das gegenüber der Neutralposition nun schwächer auf den magnetsensitiven Sensor wirkende resultierende Magnetfeld lässt ebenfalls eine eindeutige Erkennung der Kippbewegung zu.

Auf Basis der beschriebenen Prinzipien ist der Fachmann ohne weiteres befähigt, eigenständig eine Vielzahl geeigneter Anordnungen von Sensoren und Magnete zu ermitteln, die für die Erkennung einer durch den Fachmann konkret angestrebten Menge von Bewegungen geeignet sind und entsprechende spezifische Sensorsingale generieren können.

In bevorzugter Ausgestaltung des Signalgebers der Erfindung ist vorgesehen, dass die ringartige Geberbasis zum Ansetzen des ringartigen Bedienelements eine plane Ansatzfläche aufweist und das ringartige Bedienelement einen ersten Anlageabschnitt und einen zweiten Anlageabschnitt umfasst, wobei der erste Anlageabschnitt, der zweite Anlageabschnitt und die plane Ansatzfläche derart zusammenwirkend angeordnet sind, dass:
1. der erste Anlageabschnitt plan an der Ansatzfläche anliegt und zur Durchführung der Drehbewegung auf der Ansatzfläche gleitet, während der zweite Anlageabschnitt die Ansatzfläche nicht kontaktiert, wenn sich das ringartige Bedienelement in der Neutralposition befindet, und
2. der zweite Anlageabschnitt zur Durchführung der Kippbewegung, ausgehend von der Neutralposition, an der Ansatzfläche zur Anlage bringbar ist, während sich der erste Anlageabschnitt von der Ansatzfläche abhebt.

Demnach ist die Ansatzfläche des Basisrings plan ausgebildet und die Anlagefläche des Bedienrings verläuft in wenigstens zwei gegenüber einander abgewinkelten Anlageebenen, wobei ein Winkel zwischen den Anlageebenen die maximal mögliche Kippbewegung definiert.

Auf diese Weise stehen geometrisch eindeutige Funktionsflächen zur Führung der Drehbewegung und der Kippbewegung durch Wirkflächenpaarung zur Verfügung, die zugleich einfach herstellbar sind und unter Beibehaltung des kompakten Designs in den Bedienring integriert sind.

In bevorzugter Ausgestaltung des Signalgebers der Erfindung ist vorgesehen, dass zwischen dem zweiten Anlageabschnitt und der Ansatzfläche eine, vorzugsweise keilförmig verlaufende, Aussparung gebildet ist, wenn der erste Anlageabschnitt plan an der Ansatzfläche anliegt.

Ein Keilwinkel der keilförmigen Aussparung ist hier wiederum maßgeblich für die maximal mögliche Kippbewegung.

Da der Bedienring und der Basisring relativ zueinander verkippbar sein sollen und ein nicht verkippter oder nicht bedienter Zustand üblicherweise den größten Zeitanteil am Lebenszyklus des Signalgebers ausmacht, kann für diesen Zeitanteil ein Funktionsspalt zwischen Basis- und Bedienring vorliegen. Der Funktionsspalt wird beispielsweise durch die zuvor beschriebene keilförmige Aussparung gebildet. Es kann daher vorteilhaft sein, wenn der Bedienring einen kragenartigen Abschnitt umfasst, der den Basisring zumindest abschnittsweise an dessen Außenumfang umgreift bzw. sich zumindest abschnittsweise über dessen äußere Mantelfläche erstreckt, wenn der Bedienring am Basisring angesetzt ist.

Eine Exposition des Funktionsspalts gegenüber der Umwelt kann durch jenes Umgreifen mit dem kragenartigen Abschnitt miniert werden, was den Signalgeber effektiv vor äußeren Verunreinigungen oder auch Feuchtigkeit schützt.

Vorzugsweise kann auch der Bedienabschnitt des Bedienrings an dem kragenartigen Abschnitt angeordnet sein.

Prinzipiell kann es möglich sein, eine Kippbewegung des Bedienrings durch Drücken oder Anheben des Bedienrings gegenüber dem Basisring zu realisieren. In jedem Fall wird durch eine Kippbewegung stets ein Teil des Bedienrings vom Basisring weg verlagert, wodurch sich weiterhin ein Bedienspalt ergeben kann. Um sowohl den Funktionsspalt als auch den Bedienspalt nach außen hin abzudichten, kann der eine oder auch weitere kragenartige Abschnitte entsprechend dimensioniert werden und bei Bedarf sogar den gesamten Basisring zumindest abschnittsweise an dessen Außenumfang umgreifen.

Ein weiterer Aspekt der Erfindung betrifft ein Verfahren zur Montage eines Signalgebers für eine Schalteinrichtung für ein Fahrrad, konkret einer erfindungsgemäßen Schalteinrichtung gemäß der vorliegenden Offenbarung, wobei ein/das ringartiges/ringartige Bedienelement an eine/die ringartige Geberbasis angesetzt wird, sodass die ringartige Geberbasis und das ringartige Bedienelement gemeinsam eine/die Durchgangsöffnung zur Aufnahme einer/der Lenkstange des Fahrrades bilden, wobei das Bedienelement durch wenigstens einen Magneten in eine/die Neutralposition an der ringartigen Geberbasis gebracht wird.

Die Montage ist somit sehr einfach und sicher durchführbar, da lediglich zwei Teile relativ zueinander positioniert und orientiert werden müssen. Der Magnet unterstützt dabei die Montage, indem er den Bedienring unterstützend in die korrekte Lage zieht. Zudem bildet er auch eine Art Fail-Safe-Funktion gegen eine falsche Anordnung, in der der Magnet den Bedienring nicht in der Neutralposition hält, da für einen Monteur spürbar ist, ob die Magnetkraft bestimmungsgemäß wirkt. Solange noch keine Lenkstange in der Durchgangsöffnung angeordnet ist, kann die Montage rein zur begrifflichen Unterscheidung der Zustände auch als Vormontage verstanden werden.

In bevorzugter Ausgestaltung des Verfahrens der Erfindung ist vorgesehen, dass die ringartige Geberbasis einen/den Führungsabschnitt umfasst und das ringartige Bedienelement einen/den führbaren Abschnitt umfasst, der komplementär zu dem Führungsabschnitt ausgebildet ist und dass die Lenkstange des Fahrrades in die Durchgangsöffnung geführt wird, wodurch der Führungsabschnitt das ringartige Bedienelement durch Wechselwirkung mit dem führbaren Abschnitt entlang der Längsachse der Durchgangsöffnung sichert.

Dieser Schritt kann analog auch als Endmontage verstanden werden und ist einfach und effizient mit nur einer Aktion ausführbar, mit welcher der vormontierte Signalgeber als Baugruppe auf der Lenkstange gesichert wird.

Zur finalen Fixierung des Signalgebers als Ganzes entlang der Längsachse der Lenkstange kann beispielsweise eine Klemmschraube vorgesehen sein, mit der in einem weiteren Schritt ein Fixierungsabschnitt der ringartigen Geberbasis um die Lenkstange gespannt wird. Es kann aber auch beispielsweise eine haftungsvermittelnde Oberfläche in der Durchgangsöffnung des Signalgebers vorgesehen sein, beispielsweise aus Gummi, sodass der Signalgeber hinreichend in seiner Position auf der Lenkstange haftet.

Ein weiterer Aspekt der Erfindung betrifft ein Verfahren zum Betreiben eines Signalgebers, konkret eines erfindungsgemäßen Signalgebers gemäß der vorliegenden Offenbarung, wobei ein/das ringartiges/ringartige Bedienelement in einer/der Neutralposition an einer/der ringartigen Geberbasis angesetzt ist und das ringartige Bedienelement aus der Neutralposition heraus zumindest zur Durchführung einer der folgenden Bewegungen bedient wird:
- Durchführung einer/der Drehbewegung relativ zur ringartigen Geberbasis in eine/die erste Richtung um eine/die Längsachse einer/der Durchgangsöffnung, oder
- Durchführung einer/der Drehbewegung relativ zur ringartigen Geberbasis in eine/die zweite Richtung um eine/die Längsachse der Durchgangsöffnung, oder
- Durchführung einer/der Kippbewegung relativ zur ringartigen Geberbasis.

Diese Bedienung kann im Betrieb durch den Fahrer des Fahrrads erfolgen oder auch herstellerseitig zum Testen des Signalgebers nach der Vor- oder Endmontage. Hierbei können vorteilhaft die mechanischen Eigenschaften bzw. Bewegungen getestet werden und testweise entsprechende spezifische Gebersignale erzeugt werden.

Ein weiterer Aspekt der Erfindung betrifft eine Schalteinrichtung für ein Fahrrad, umfassend wenigstens: einen erfindungsgemäßen Signalgeber gemäß der vorliegenden Offenbarung, ein Steuergerät zur Erzeugung von Steuersignalen aus durch den Signalgeber erzeugbaren Gebersignalen und eine Steuerstrecke.

Die Steuerstrecke kann vielfältige mechanische oder elektrische Systeme umfassen, die mit all den hierin offenbarten sowie weiteren im Fahrradbereich zweckmäßigen Funktionen korrespondieren können.

Das Steuergerät kann entsprechend vielfältig ausgebildet und eingerichtet sein, indem es einerseits physisch mit den relevanten Systemen wirkverbunden ist und andererseits eine Software umfasst, die bestimmte Funktionen über geeignete Steuersignale spezifischen Gebersignalen zuordnet.

Diese Funktionen können prinzipiell sogar konfigurierbar sein. Vorzugsweise umfasst das Steuergerät hierzu eine geeignete Schnittstelle. Die Schnittstelle kann beispielsweise kabelgebunden oder kabellos realisiert werden. Die Schnittstelle kann beispielsweise durch eine Computer-Schnittstelle zu einem externen Computer (vorzugsweise beim Hersteller) realisiert werden. Die Schnittstelle kann aber beispielsweise auch mit einem Smartphone realisiert werden, dass mit einer entsprechenden App ausgestattet ist (vorzugsweise nutzerseitig).

In bevorzugter Ausgestaltung der Schalteinrichtung der Erfindung ist vorgesehen, dass die Steuerstrecke ein Schaltwerk und wenigstens eine weitere ansteuerbare Einrichtung des Fahrrads umfasst, und dass das Steuergerät zu Folgendem eingerichtet ist:
- zur Erzeugung eines Steuersignals zum Hochschalten des Schaltwerks, aus einem Gebersignal, das einer/der Drehbewegung des ringartigen Bedienelements des Signalgebers in eine/die erste Richtung entspricht,
- zur Erzeugung eines Steuersignals zum Herunterschalten des Schaltwerks, aus einem Gebersignal, das einer/der Drehbewegung des ringartigen Bedienelements in eine/die zweite Richtung entspricht, und
- zur Erzeugung eines Steuersignals zum Ansteuern der weiteren ansteuerbaren Einrichtung, aus einem Gebersignal, das einer/der Kippbewegung des ringartigen Bedienelements entspricht.

Bevorzugt kann, aus Sicht des Fahrers des Fahrrads beim Fahrradfahren, die erste Richtung einem Nach-Vorne-Drehen des Bedienrings entsprechen. Die zweite Richtung kann vorzugsweise einem Nach-Hinten-Drehen des Bedienrings entsprechen. Die Kippbewegung kann vorzugsweise einer mit dem linken Daumen nach rechts oder mit dem rechten Daumen nach links ausgeführten Kippbewegung des Bedienrings, also einer Kippbewegung von der Seite zur Mitte des Lenkers hin, entsprechen. Als weitere ansteuerbare Einrichtung kann über die Kippbewegung beispielsweise ein Licht an- oder ausgeschaltet werden oder auch einen Akkustand einer Fahrradbatterie auf einem Display des Fahrrads angezeigt werden.

Ein weiterer Aspekt der Erfindung betrifft ein Fahrrad, umfassend eine erfindungsgemäße Schalteinrichtung gemäß der vorliegenden Offenbarung.

Mit Hinblick auf mögliche Ausgestaltungen des Signalgebers, der Schalteinrichtung und des Fahrrads der Erfindung wird angemerkt, dass alle in der Beschreibung der erfindungsgemäßen Verfahren offenbarten Merkmale dieser Gegenstände auch als deren mögliche eigenständigen Merkmale offenbart werden. Analog werden etwaige in Bezug auf diese erfindungsgemäßen Gegenstände offenbarte Verfahrensmerkmale auch als mögliche eigenständige Merkmale von Ausgestaltungen der erfindungsgemäßen Verfahren offenbart.

Grundsätzlich gilt, dass alle Merkmale, die hierin mit Bezug auf eine bestimmte Ausführungsform offenbart werden, auch mit anderen Ausführungsformen der Erfindung kombinierbar sind. Dies gilt insbesondere auch auszugsweise für einzelne Merkmale, solange hierin nicht explizit darauf hingewiesen wird, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und schematischen Zeichnungen exemplarisch erläutert. Hierbei zeigen:
- Figur 1: ein erfindungsgemäßes Fahrrad;
- Figur 2: einen erfindungsgemäßen Signalgeber in einer perspektivischen Ansicht;
- Figur 3: den Signalgeber in einer seitlichen Ansicht;
- Figur 4: den Signalgeber in einer Draufsicht;
- Figur 5: eine ringartige Geberbasis des Signalgebers;
- Figur 6: ein ringartiges Bedienelement des Signalgebers;
- Figur 7: den Signalgeber in einer weiteren perspektivischen Ansicht;
- Figur 8: eine vergrößerte Ansicht des Details A aus Figur 7;
- Figur 9: eine weitere Ausführung eines Signalgebers in einer perspektivischen Rückansicht;
- Figur 10: die ringartige Geberbasis des Signalgebers aus Figur 9 in einer perspektivischen Vorderansicht; und
- Figur 11: den Signalgeber aus Figur 9 in einer perspektivischen Vorderansicht.

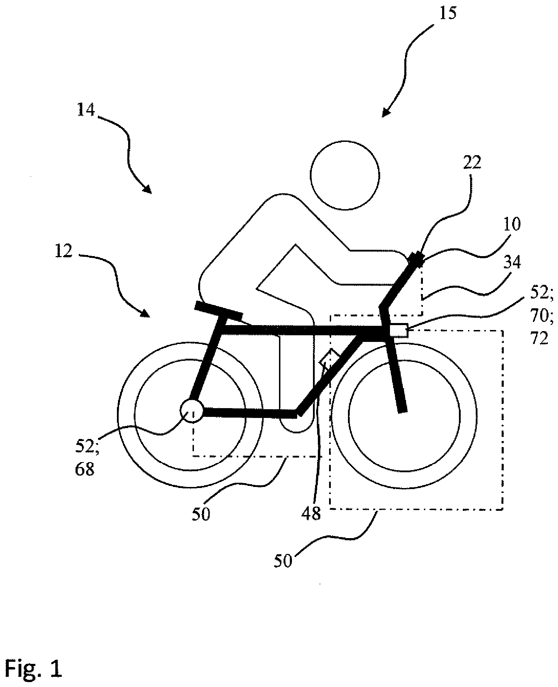

Figur 1 zeigt ein erfindungsgemäßes Fahrrad 14, umfassend eine erfindungsgemäße Schalteinrichtung 12. Die Schalteinrichtung 12 umfasst einen erfindungsgemäßen Signalgeber 10, auf den im Folgenden noch detailliert eingegangen wird. Der Signalgeber 10 ist hier rein exemplarisch an einer Lenkstange 22 des Fahrrads 14 montiert.

Der Signalgeber 10 ist in der Lage, Gebersignale 34 zu erzeugen. Die Schalteinrichtung 12 umfasst ferner ein Steuergerät 48 zur Erzeugung von Steuersignalen 50 aus den Gebersignalen 34 des Signalgebers 10. Weiterhin umfasst die Schalteinrichtung 12 eine Steuerstrecke 52, die mit den Steuersignalen 50 ansteuerbar ist. Die Steuerstrecke 52 umfasst rein beispielhaft ein Schaltwerk 68 und eine weitere ansteuerbare Einrichtung 70, die hier rein exemplarisch als Beleuchtungseinrichtung 72 vorliegt.

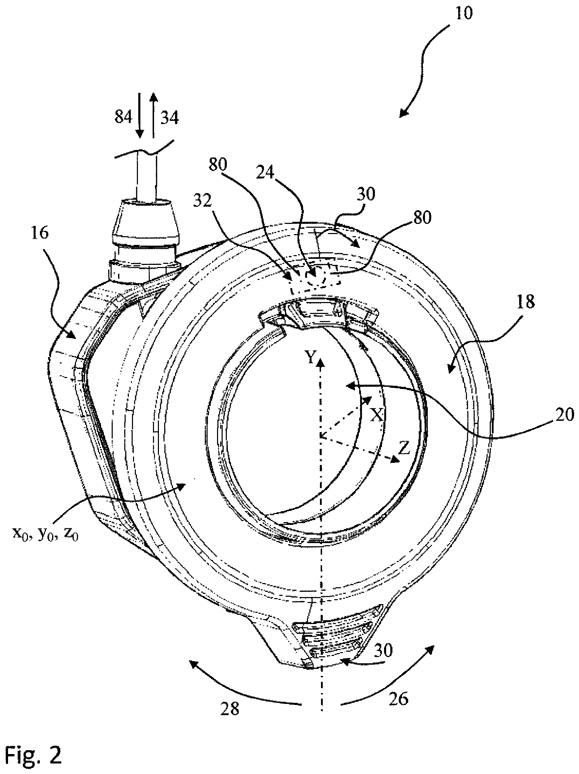

Figur 2 zeigt einen erfindungsgemäßen Signalgeber 10 in einer perspektivischen schematischen Ansicht. Der Signalgeber 10 ist hier rein beispielhaft für die Schalteinrichtung 12 des in Figur 1 dargestellten Fahrrads 14 bestimmt und wird mit Bezug auf dieses beschrieben, ohne dass dies beschränkend für den Signalgeber 10 der Erfindung zu verstehen ist.

Im Folgenden wird je nach Bedarf auf die Figuren 1 bis 8 eingegangen, und der Signalgeber 10 sowie dessen Bestandteile werden weiterführend erläutert. Dementsprechend werden für alle Figuren dieselben Bezugszeichen verwendet.

Der Signalgeber 10, wie in Figur 2 gezeigt, umfasst eine ringartige Geberbasis 16 und ein ringartiges Bedienelement 18. Das ringartige Bedienelement 18 kann auch als Bedienring 18 bezeichnet werden und ist an der ringartigen Geberbasis 16 angesetzt, welche ringartige Geberbasis 16 auch als Basisring 16 bezeichnet werden kann.

Dadurch, dass das ringartige Bedienelement 18 an die ringartige Geberbasis 16 angesetzt ist, bilden diese gemeinsam eine Durchgangsöffnung 20 zur Aufnahme der Lenkstange 22 des Fahrrads 14, wie in Figur 2 ersichtlich, wobei wie in Figur 1 angedeutet die Lenkstange 22 sich durch die Durchgangsöffnung 20 erstreckt.

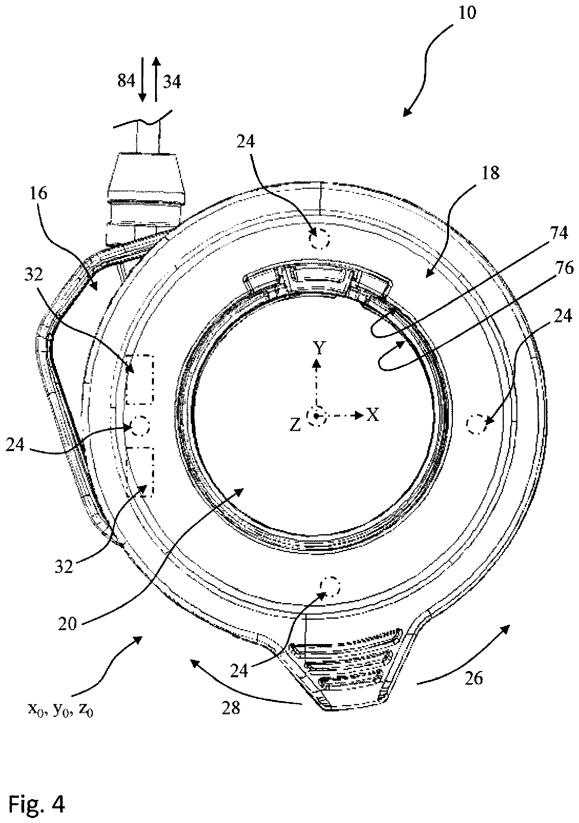

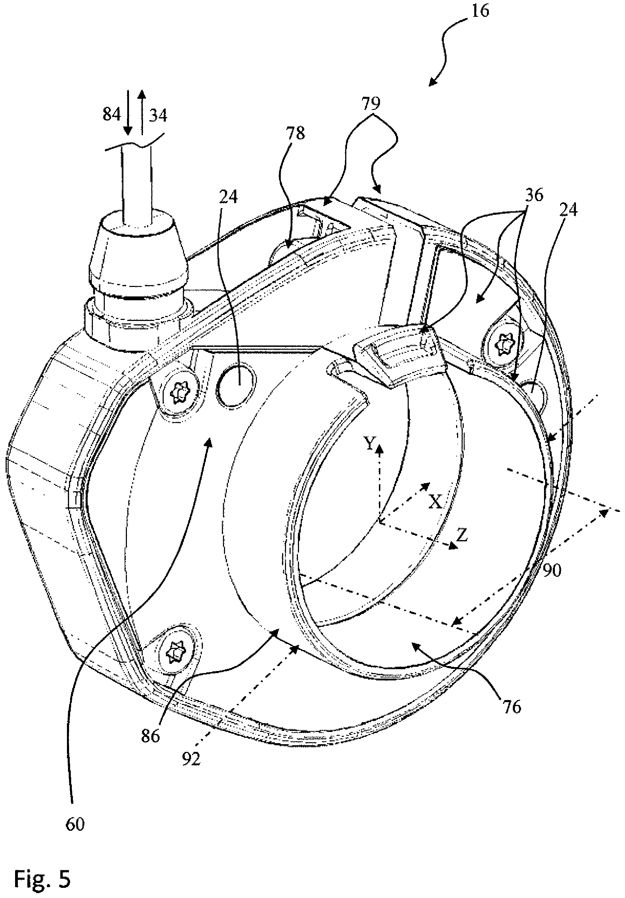

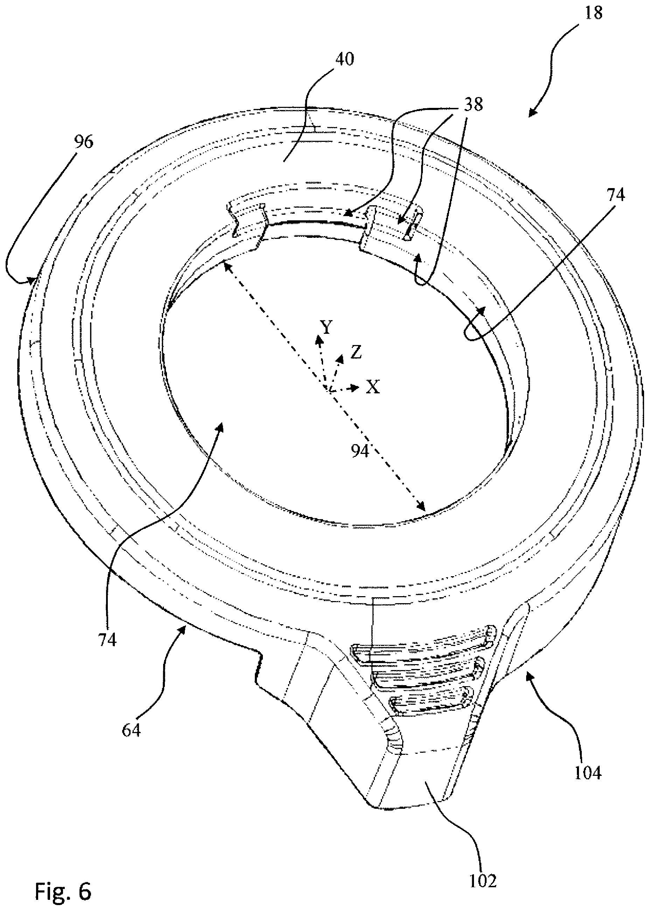

Wie in Figur 4 ersichtlich, in welcher der Signalgeber 10 in einer Draufsicht gezeigt ist, wird die gemeinsame Durchgangsöffnung 20 durch eine Durchgangsöffnung 74 des ringartigen Bedienelements 18 in konzentrischer Anordnung mit einer Durchgangsöffnung 76 der ringartigen Geberbasis 16 gebildet. Zum Zweck der weiteren Erläuterungen wird ein Koordinatensystem des Signalgebers 10 definiert, umfassend eine X-Achse, eine Y-Achse und eine Z-Achse, wobei die Z-Achse zugleich auch einer Längsachse der Durchgangsöffnung 20 entspricht. In den Figuren 2, 3, 4, 7 und 8 ist das ringartige Bedienelement 18, bezogen auf dieses Koordinatensystem, in einer Neutralposition x0, y0, z0 an der ringartigen Geberbasis 16 angesetzt dargestellt. In der Neutralposition x0, y0, z0 ist das ringartige Bedienelement 18 gegenüber der ringartigen Geberbasis 16 weder verdreht, noch verkippt. Dies bedeutet, dass das Koordinatensystem des Signalgebers 10 in der Neutralposition x0, y0, z0 als identisch mit körpereigenen Koordinatensystemen des ringartigen Bedienelements 18 und der ringartigen Geberbasis 16 angesehen werden kann. Zur Vereinfachung der Illustrationen wird daher auch in den Figuren 5 und 6 durchweg auf das Koordinatensystem des Signalgebers 10 als Ganzes abgestellt, da wie eben erläutert die Koordinatensysteme des Basisrings 16 und des Bedienrings 18 in der Neutralposition x0, y0, z0 mit diesem übereinstimmen.

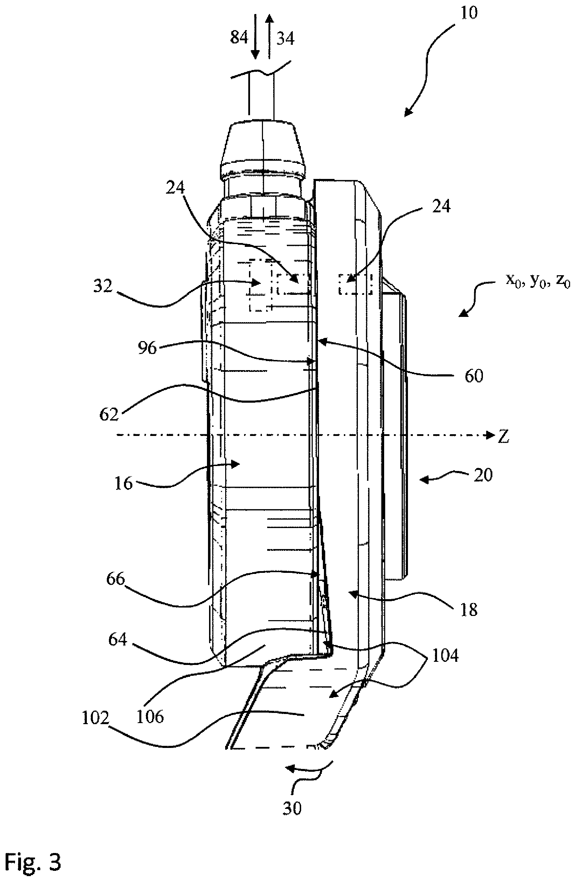

Das ringartige Bedienelement 18 weist wenigstens einen Magneten 24 auf und ist derart eingerichtet, dass das ringartige Bedienelement 18 durch den wenigstens einen Magneten 24 in der Neutralposition x0, y0, z0 an der ringartigen Geberbasis 16 gehalten wird. Hierzu kann in einigen Ausführungsformen die ringartige Geberbasis 16 beispielsweise ein magnetisch anziehbares Material (nicht gesondert dargestellt) umfassen. Es können aber, wie etwa in den Figuren 3, 4 und 5 gezeigt, auch mehrere Magnete 24 auf die ringartige Geberbasis 16 und das ringartige Bedienelement 18 verteilt sein.

Figur 3 zeigt den Signalgeber 10 in einer seitlichen Ansicht und verdeutlicht exemplarisch, dass in einer möglichen Ausführungsform sowohl in dem ringartigen Bedienelement 18 als auch in der ringartigen Geberbasis 16 ein Magnet 24 angeordnet sein kann, wobei diese Magnete 24 dann in der Neutralposition x0, y0, z0 ein Magnetpaar bilden. Durch die Wechselwirkung der das Magnetpaar bildenden Magnete 24 wird das ringartige Bedienelement 18 effektiv in der Neutralposition x0, y0, z0 gehalten.

Grundsätzlich wird durch die magnetische Anziehungskraft des wenigstens einen Magneten 24 das ringartige Bedienelement 18 so lange in der Neutralposition x0, y0, z0 gehalten, bis eine ausreichend große äußere Kraft auf das ringartige Bedienelement 18 wirkt, um es aus der Neutralposition x0, y0, z0 zu bewegen. Nach Wegfall der äußeren Kraft kehrt das ringartige Bedienelement 18 aufgrund der Magnetkraft dann wieder in die Neutralposition x0, y0, z0 zurück.

Die äußere Kraft kann beispielsweise durch einen Fahrer 15 des in Figur 1 gezeigten Fahrrads 14 aufgebracht werden, der eine Bedienaktion an dem Signalgeber 10 durchführt.

Das ringartige Bedienelement 18 ist, ausgehend von der Neutralposition x0, y0, z0, hierbei zumindest wie in Figur 2 angedeutet bedienbar:
Zum einen kann wahlweise eine Drehbewegung in eine erste Richtung 26 oder eine Drehbewegung in eine zweite Richtung 28 mit dem ringartigen Bedienelement 18 relativ zur ringartigen Geberbasis 16 um die Z-Achse bzw. die Längsachse der gemeinsamen Durchgangsöffnung 20 durchgeführt werden. Zum anderen kann eine Kippbewegung 30 des ringartigen Bedienelements 18 relativ zur ringartigen Geberbasis 16 durchgeführt werden, was beispielsweise einer Kippbewegung 30 um die X-Achse entsprechen kann.

Der Signalgeber 10 umfasst dabei wenigstens einen Sensor 32, der auf die jeweilige spezifische Bewegung (Bezugszeichen 26, 28 oder 30) eindeutig reagiert. Der Sensor 32 kann vorzugsweise als magnetsensitiver Sensor ausgebildet sein, beispielsweise als Hall-Sensor. Der Sensor 32 ist vorzugsweise in der ringartigen Geberbasis 16 angeordnet, wie beispielsweise in Figur 3 gezeigt. Der Sensor 32 reagiert als magnetsensitiver Sensor entsprechend auf das Magnetfeld des Magneten 24 und erzeugt dadurch die auch in Figur 1 angedeuteten Gebersignale 34, jeweils spezifisch für die in Figur 2 angedeutete Drehbewegung in die erste Richtung 26, Drehbewegung in die zweite Richtung 28 oder Kippbewegung 30 des Bedienelements 18.

Die Kippbewegung 30 kann ausgehend von der in Figur 2 gezeigten Neutralposition x0, y0, z0 beispielsweise dadurch erkannt werden, dass der Magnet 24 sich vom Sensor 32 entfernt, wie durch den die Kippbewegung 30 repräsentierenden gekrümmten Pfeil oberhalb des Sensors 32 in Figur 2 angedeutet ist. Der Einfluss des Magnetfeldes auf den Sensor 32 wird folglich schwächer, was als Kippbewegung 30 detektiert werden kann.

Die Drehbewegung in die erste Richtung 26 oder die Drehbewegung in die zweite Richtung 28 können ausgehend von der in Figur 2 gezeigten Neutralposition x0, y0, z0 beispielsweise dadurch erkannt werden, dass der Sensor 32 intern zwei Hall-Spannungs-Kreise 80 umfasst, die seitlich versetzt zueinander bzw. bezogen auf die Neutralposition x0, y0, z0 links und rechts vom Magneten 24 angeordnet sind. Je nach Drehbewegung in die erste Richtung 26 oder Drehbewegung in die zweite Richtung 28 reagiert dann einer der Hall-Spannungs-Kreise 80 zuerst und/oder stärker als der andere auf das sich ändernde Magnetfeld des Magneten 24. Dies kann entsprechend als spezifische Drehbewegung in die erste Richtung 26 oder in die zweite Richtung 28 detektiert werden.

Es können aber auch, wie in Figur 4 exemplarisch gezeigt, mehrere Sensoren 32 verwendet werden, die bezogen auf die Neutralposition x0, y0, z0 links und rechts vom Magneten 24 angeordnet sind. Figur 4 zeigt den Signalgeber 10 in der Draufsicht mit Blick auf die X-Y-Ebene des Koordinatensystems des Signalgebers 10 bzw. mit Blick in negative Z-Richtung. Hier ist zudem erkennbar, dass der Magnet 24 mit den Sensoren 32 in einer möglichen Ausführungsform auch an anderer Position angeordnet sein kann als beispielsweise in Figur 2 und 3 gezeigt. Zusätzlich ist in Figur 4 noch angedeutet, dass eine Vielzahl von Magneten 24, die auch zu einer Vielzahl von Magnetpaaren gehören können, vorgesehen sein kann, um das ringartige Bedienelement 18 noch sicherer in der Neutralposition x0, y0, z0 zu halten.

Die Figur 5 zeigt die ringartige Geberbasis 16 und Figur 6 zeigt das ringartige Bedienelement 18, jeweils einzeln in perspektivischer Ansicht.

Rein exemplarisch ist in Figur 5 erkennbar, dass die ringartige Geberbasis 16 eine Leitung für Energie 84 und/oder Daten bzw. Gebersignale 34 aufweist. Die Leitung kann den Sensor 32 mit beispielsweise dem Steuergerät 48 aus Figur 1 wirkverbinden.

Ferner ist rein exemplarisch eine Klemmschraube 78 angedeutet, mit der ein Fixierungsabschnitt 79 der ringartigen Geberbasis 16 um die Lenkstange 22 gespannt werden kann, damit der Signalgeber 10 final auf der Lenkstange 22 entlang der Durchgangsöffnung 20 fixiert werden kann. Die ringartige Geberbasis 16 besteht im Wesentlichen aus Kunststoff, kann jedoch beispielsweise zur Aufnahme der Klemmschraube 78 einen Metalleinsatz aufweisen. Auch Elemente wie der Sensor 32 im Innern der ringartigen Geberbasis 16 bestehen zusätzlich aus anderen Materialien. Entsprechendes gilt für das im Wesentlichen aus Kunststoff bestehende ringartige Bedienelement 18, das aber beispielsweise auch den Magnet 24 aus Metall aufweist.

Figur 5 zeigt weiterhin, dass die ringartige Geberbasis 16 einen Führungsabschnitt 36 umfasst. In diesem Beispiel umfasst der Führungsabschnitt 36 eine Ansatzfläche 60 und einen von dieser entlang der Z-Achse abstehenden Führungsstutzen 86. Der Führungsstutzen 86 ist an der Formung der Durchgangsöffnung 76 der ringartigen Geberbasis 16 beteiligt und weist einen Innendurchmesser 90 auf. Im Innendurchmesser 90 kann der Führungsstutzen 86 die Lenkstange 22 aufnehmen. Bevor die genannten Merkmale weiter erläutert werden, wird auf Figur 6 näher eingegangen.

So zeigt Figur 6 das ringartige Bedienelement 18, welches einen führbaren Abschnitt 38 aufweist. Der führbare Abschnitt 38 ist komplementär zu dem Führungsabschnitt 36 der ringartigen Geberbasis 16 ausgebildet. Der führbare Abschnitt 38 ist an der Formung der Durchgangsöffnung 74 des ringartige Bedienelements 18 beteiligt und weist einen Innendurchmesser 94 auf. Der Innendurchmesser 94 ist vorzugsweise etwas größer als ein Außendurchmesser 92 des Führungsstützens 86 (Figur 5). Somit kann der Bedienring 18 konzentrisch auf den Führungsstützen 86 geschoben werden und so toleriert sein, sodass er das nötige Spiel zur Durchführung der Kippbewegung 30 und Drehbewegungen 26, 28, wie oben erläutert, aufweist.

Ferner umfasst der führbare Abschnitt 38 eine Anlagefläche 96, die in der Ansicht der Figur 6 zwar mit dem Bezugszeichen 96 angedeutet aber nicht unmittelbar sichtbar ist, da sie einer vordergründig erkennbaren Stirnfläche 40 des ringartigen Bedienelements 18 gegenüberliegt. Die Anlagefläche 96 wird bestimmungsgemäß an der Ansatzfläche 60 (Figur 5) angesetzt und steht dann mit dieser in Kontakt.

Der Führungsabschnitt 36 des Basisrings 16 und der führbare Abschnitt 38 des Bedienrings 18 übernehmen somit eine Vielzahl von Funktionen und können im erweiterten Sinne auch als Verbindungsmittel bzw. Verbindungsstrukturen interpretiert werden.

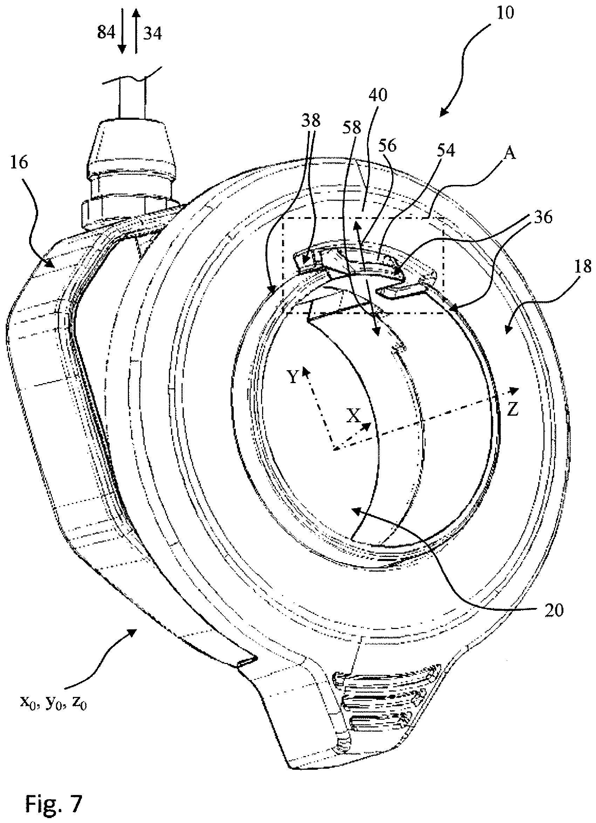

Figur 7 zeigt den Signalgeber 10 in einer weiteren perspektivischen Ansicht, in der der Bedienring 18 wieder am Basisring 16 angesetzt ist. Hierbei steht der Führungsabschnitt 36 mit dem führbaren Abschnitt 38 derart in Wechselwirkung, dass während der Durchführung der Drehbewegung 26, 28 des ringartigen Bedienelements 18 relativ zur ringartigen Geberbasis 16, wie in Figur 2 (Bezugszeichen 26 oder 28) ausgehend von der Neutralposition x0, y0, z0 angedeutet, im Wesentlichen keine Kippbewegung 30 möglich ist. Analog ist während der Durchführung der Kippbewegung 30 des ringartigen Bedienelements 18 relativ zur ringartigen Geberbasis 16, ausgehend von der Neutralposition x0, y0, z0, im Wesentlichen keine Drehbewegung 26, 28 möglich.

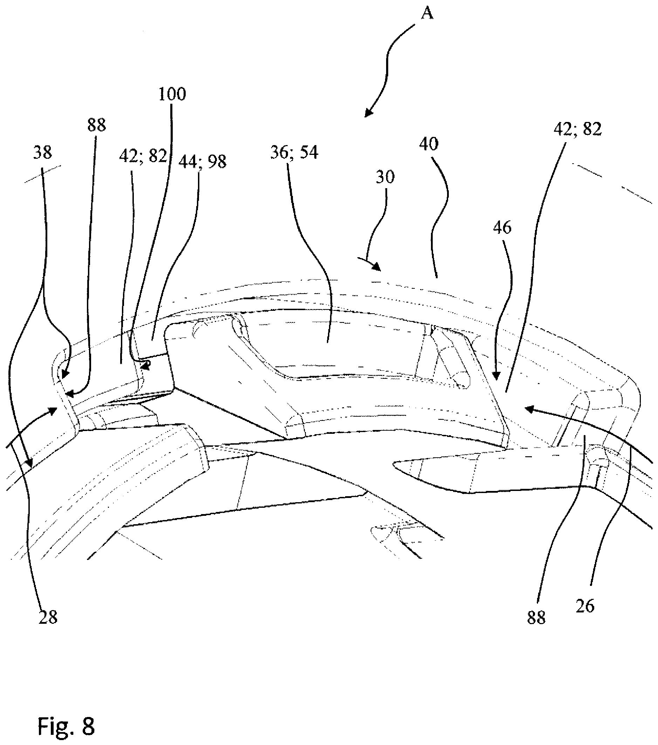

Dies wird gemäß Detail A in Figur 7 (rechteckiger mittels Strich-Punkt-Linien gekennzeichneter Ausschnitt), welches Detail A in Figur 8 vergrößert dargestellt ist, erreicht, indem der führbare Abschnitt 38 an der Stirnfläche 40 eine in zwei unterschiedlich tiefen Ebenen verlaufende Aussparung 46 umfasst, wobei die Aussparung 46 wiederum eine Flachebene 42 und eine Tiefebene 44 aufweist. Wie in Figur 8 ersichtlich, erstreckt sich die Tiefebene 44 in dieser Ausführungsform exemplarisch von einem Grund 82 der Flachebene 42 aus weiter in negative Z-Richtung.

Der Führungsabschnitt 36 steht mit der Aussparung 46 derart in Eingriff, dass die Aussparung 46 auf der Flachebene 42 die Drehbewegung in die erste Richtung 26 und die Drehbewegung in die zweite Richtung 28 begrenzt sowie die Kippbewegung 30 verhindert. Dies wird erreicht, indem der Führungsabschnitt 36 zur Durchführung der Drehbewegung 26, 28 um die Z-Achse zwar über den Grund 82 der Flachebene 42 gleiten kann, der Grund 82 zugleich aber die Kippbewegung 30 als Anschlag nach vorn verhindert. Die Drehbewegungen 26, 28 sind wiederum durch Seitenwände 88 der Flachebene 42 als Anschläge begrenzt.

Alternativ können die Drehbewegungen 26, 28 verhindert werden und dafür die Kippbewegung 30 zugelassen werden. Die Kippbewegung 30 ist dann nach vorn bis zum Anschlag des Führungsabschnitts 36 an einem Grund 98 der Tiefebene 44 möglich, wobei die Drehbewegungen 26, 28 durch Seitenwände 100 der Tiefebene 44 als Anschläge verhindert werden.

Jeweils in Wechselwirkung mit dem Führungsabschnitt 36 wird in diesem Ausführungsbeispiel also eine Bewegungstrennung zwischen den Drehbewegungen 26, 28 und der Kippbewegung 30 über den Grund 82 der Flachebene 42 und die Seitenwände 100 der Tiefebene 44 erreicht (in Figur 8 ist nur eine der beiden Seitenwänden 100 erkennbar bzw. über den entsprechenden Pfeil angedeutet, da die weitere Seitenwand von dem Führungsabschnitt 36 bzw. der später erläuterten Sicherungsnase 54 verdeckt ist). Ferner wird über die Seitenwände 88 der Flachebene 42 und den Grund 98 der Tiefebene 44 eine Bewegungsbegrenzung erreicht.

Wie weiterhin anhand von Figur 7 erläutert wird, kann mithilfe des Führungsabschnitts 36 in Wechselwirkung mit dem führbaren Abschnitt 38 weiterhin erreicht werden, dass der Führungsabschnitt 36 das ringartige Bedienelement 18 entlang der Längsachse der Durchgangsöffnung 20 bzw. der Z-Achse sichert, wenn die Lenkstange 22 des Fahrrades 14 in der Durchgangsöffnung 20 aufgenommen ist.

Dies wird vorliegend exemplarisch mit einem Sicherungsabschnitt in Form einer elastisch gelagerten Sicherungsnase 54 des Führungsabschnitts 36 erreicht. Unter kurzer Rückschau auf Figur 8 ist es auch diese Sicherungsnase 54, die in der Aussparung 46 zur Realisierung der Bewegungstrennung und -begrenzung definiert beweglich ist.

Wie in Figur 7 über die beiden in entgegengesetzte Richtungen weisenden Pfeile 56 und 58 angedeutet, ist die Sicherungsnase 54 zwischen einer (in Figur 7 dargestellten) Sicherungsposition 56 und einer (in Figur 7 nicht dargestellten, sondern nur über den Pfeil 58 angedeuteten) Montageposition 58 verlagerbar. In der Montageposition 58 ragt die Sicherungsnase 54 zumindest abschnittsweise in die Durchgangsöffnung 20. Dies ist nur möglich, wenn die Lenkstange 22 sich nicht in der Durchgangsöffnung 20 befindet, wie etwa in der in Figur 7 dargestellten Konstellation. In Figur 7 befindet sich die Sicherungsnase 54 jedoch gerade in der Sicherungsposition 56, wie etwa auch in Figur 8 zu erkennen.

In der Sicherungsposition 56 ist die Sicherungsnase 54 vollständig außerhalb der Durchgangsöffnung 20 angeordnet, was den in den Figuren 7 und 8 gezeigten Zuständen entspricht. Die Sicherungsnase 54 ist also bezogen auf ihre radiale Position bzw. die entsprechende Y-Koordinate nach außen gedrängt, wobei jenes Drängen nach außen eben durch eine sich durch die Durchgangsöffnung 20 erstreckende Lenkstange 22 verwirklicht werden kann. In der alternativen Montageposition 58 (nicht in Figur 7 bzw. Figur 8 dargestellt, sondern nur über den Pfeil 58 in Figur 7 angedeutet) ist die Sicherungsnase 54 wiederum bezüglich ihrer radialen Position bzw. der Y-Koordinate nach innen verlagert, also in Richtung Z-Achse bzw. Zentrum der Durchgangsöffnung 20 verlagert.

Ist das ringartige Bedienelement 18 wie in den Figuren 7 und 8 gezeigt an die ringartige Geberbasis 16 angesetzt und befindet sich die Sicherungsnase 54 in der gezeigten Sicherungsposition 56, so ist der führbare Abschnitt 38 entlang der Längsachse der Durchgangsöffnung 20 bzw. der Z-Achse zumindest abschnittsweise zwischen der Sicherungsnase 54 und der ringartigen Geberbasis 16 angeordnet. Besonders gut ist in Figur 8 zu erkennen, dass die Sicherungsnase 54 in negativer Z-Richtung direkt vor dem Grund 98 der Tiefebene 44 angeordnet ist.

Ist die Lenkstange 22 des Fahrrades 14 zudem in der Durchgangsöffnung 20 aufgenommen, so wird bzw. bleibt die Sicherungsnase 54 permanent durch die Lenkstange 22 in die illustrierte Sicherungsposition 56 gedrängt.

Im Folgenden wird noch einmal auf Figur 3 näher eingegangen. Dort (und in Figur 5) ist erkennbar, dass die Ansatzfläche 60 der ringartige Geberbasis 16 zum Ansetzen des ringartigen Bedienelements 18 plan ausgeführt ist. Ferner ist in Figur 3 auch die Anlagefläche 96 erkennbar. Diese Anlagefläche 96 kann in einer Ausführungsform einen ersten Anlageabschnitt 62 und einen zweiten Anlageabschnitt 64 umfassen.

Die Anlagefläche 96 und die plane Ansatzfläche 60 wirken hier derart zusammen, dass der erste Anlageabschnitt 62 plan an der Ansatzfläche 60 anliegt und zur Durchführung der Drehbewegungen 26, 28 auf der Ansatzfläche 60 gleitet, während der zweite Anlageabschnitt 64 die Ansatzfläche 60 nicht kontaktiert.

Hingegen kann der zweite Anlageabschnitt 64 zur Durchführung der Kippbewegung 30 an der Ansatzfläche 60 zur Anlage gebracht werden, wobei sich der erste Anlageabschnitt 62 von der Ansatzfläche 60 abhebt. Die Anlageabschnitte 62 und 64 können auch als abgewinkelte Anlageebenen der Anlagefläche 96 interpretiert werden. Entsprechend ist erkennbar, dass zwischen dem zweiten Anlageabschnitt 64 und der Ansatzfläche 60 eine keilförmige Aussparung 66 gebildet ist, wenn der erste Anlageabschnitt 62 (wie in Figur 3 gezeigt) plan an der Ansatzfläche 60 anliegt.

Noch einmal ergänzend bezugnehmend auf Figur 6 ist ferner erkennbar, dass der Bedienring 18 an seinem Außenumfang einen Bedienabschnitt 102 aufweisen kann. Vorliegend ist dieser exemplarisch als Bediennase ausgebildet.

Ferner ist links der Bediennase der zweite Anlageabschnitt 64 erkennbar. Rechts der Bediennase ist hingegen erkennbar, dass der Bedienring 18 an seinem Außenumfang einen kragenartigen Abschnitt 104 umfasst, der sich in negative Z-Richtung weiter erstreckt als der zweite Anlageabschnitt 64. Die Bediennase bzw. der Bedienabschnitt 102 kann dem kragenartigen Abschnitt 104 auch zugerechnet werden.

Mit dem kragenartigen Abschnitt 104 kann der Bedienring 18 den Basisring 16 zumindest abschnittsweise an dessen Außenumfang 106 umgreifen, wie in Figur 3 angedeutet ist. Spaltbildungen zwischen Bedienring 18 und Basisring 16 können so minimiert werden.

Nachdem der erfindungsgemäße Signalgeber 10 nun ausführlich in einigen, uneingeschränkt auch selektiv miteinander kombinierbaren, Ausführungsformen beschrieben worden ist, soll rein exemplarisch anhand des Signalgebers 10 für die Schalteinrichtung 12 des Fahrrads 14 noch ein erfindungsgemäßes Verfahren zur Montage eines Signalgebers beschrieben werden. Die bisherigen Bezugszeichen werden daher weiterverwendet.

In dem Verfahren wird das ringartige Bedienelement 18 aus Figur 6 an die ringartige Geberbasis 16 aus Figur 5 angesetzt, sodass die ringartige Geberbasis 16 und das ringartige Bedienelement 18 gemeinsam die Durchgangsöffnung 20 bilden, die in Figur 7 erkennbar ist. Das Bedienelement 18 wird dabei durch den oder die Magnete 24, wie etwa in Figur 4 erkennbar, in der Neutralposition x0, y0, z0 an der ringartigen Geberbasis gehalten, vorzugsweise bereits unter Beteiligung des oder der Magnete 24 in die Neutralposition x0, y0, z0 geführt.

Zum Ansetzen des ringartigen Bedienelements 18 an die ringartige Geberbasis 16 wird vorzugsweise in einem ersten Schritt zunächst die Sicherungsnase 54 in die Aussparung 46 eingehängt oder eingeschoben bzw. die Aussparung 46 wird über die Sicherungsnase 54 gehängt oder auf diese geschoben. Hierbei kann, bevorzugt zum Einhängen, das ringartige Bedienelement 18 noch leicht gegenüber der ringartigen Geberbasis 16 verkippt werden. Bevorzugt zum Auf- oder Einschieben kann die Sicherungsnase 54, beispielsweise manuell, elastisch in die (in Figur 7 angedeutete) Montageposition 58 gebogen werden.

Spätestens in einem danach folgenden zweiten Schritt wird das ringartige Bedienelement 18 an der ringartigen Geberbasis 16 zur Anlage gebracht, beispielsweise durch Anklappen oder Anlegen und die Sicherungsnase 54 wird ggf. wieder in die Sicherungsposition 56 zurückfedern gelassen.

In einem weiteren Schritt wird dann die Lenkstange 22 des Fahrrades 14 in die Durchgangsöffnung 20 geführt, wodurch der Führungsabschnitt 36 das ringartige Bedienelement 18 entlang der Längsachse der Durchgangsöffnung 20 bzw. der Z-Achse in der beschriebenen Art und Weise, besonders bevorzugt über die Sicherungsnase 54, sichert.

Sodann kann auch die Klemmschraube 78 angezogen werden und so die Position des Signalgebers 10 auf der Lenkstange 22 festgelegt werden.

Wiederum rein exemplarisch soll anhand des beispielsweise wie beschrieben an der Lenkstange 22 montierten Signalgebers 10 für die Schalteinrichtung 12 des Fahrrads 14 schließlich noch ein erfindungsgemäßes Verfahren zum Betreiben eines Signalgebers erläutert werden. Die bisherigen Bezugszeichen werden daher erneut weiterverwendet.

In dem Verfahren wird das ringartige Bedienelement 18 aus der Neutralposition x0, y0, z0 heraus zur Durchführung wenigstens einer, vorzugsweise aller in Figur 2 angedeuteten, Bewegung(en) bedient. Dies kann die Durchführung der Drehbewegung in die erste Richtung 26 sowie davor oder danach die Durchführung der Drehbewegung in die zweite Richtung 28 umfassen. Schließlich kann das Verfahren davor oder danach auch die Durchführung der Kippbewegung 30 umfassen.

Unter Bezugnahme auf Figur 1 kann das Steuergerät 48 vorzugsweise dazu eingerichtet sein, ein Steuersignal 50 zum Hochschalten des Schaltwerks 68 aus der Drehbewegung in die erste Richtung 26 zu erzeugen. Ferner kann aus der Drehbewegung in die zweite Richtung 28 vorzugsweise ein Steuersignal 50 zum Herunterschalten des Schaltwerks 68 erzeugt werden. Aus der Kippbewegung 30 kann bevorzugt ein Steuersignal 50 zum Ein- oder Ausschalten der Beleuchtungseinrichtung 72 als weitere ansteuerbare Einrichtung 70 erzeugt werden.

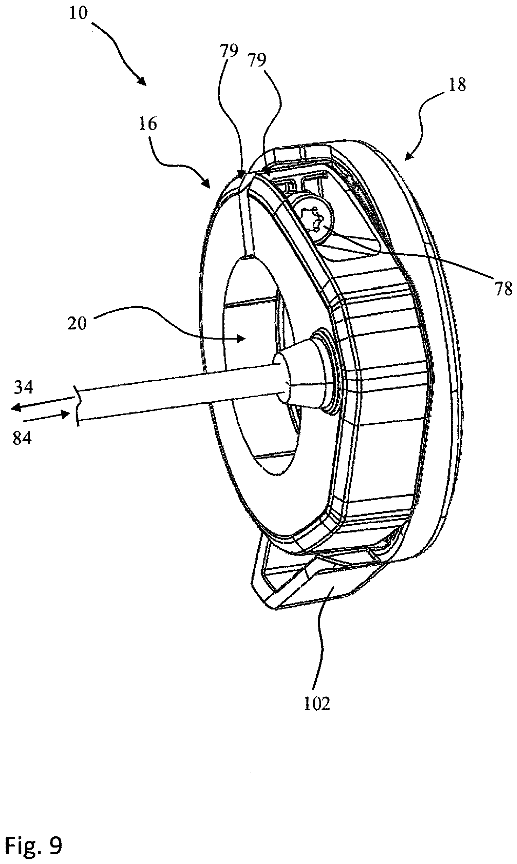

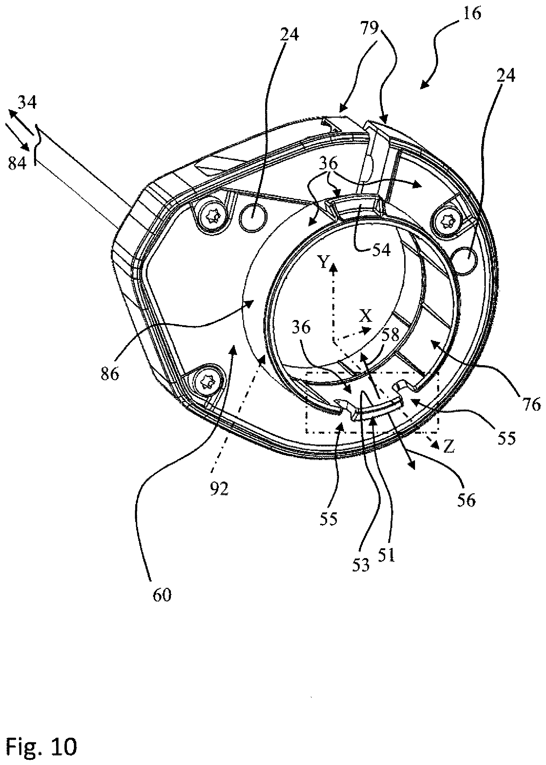

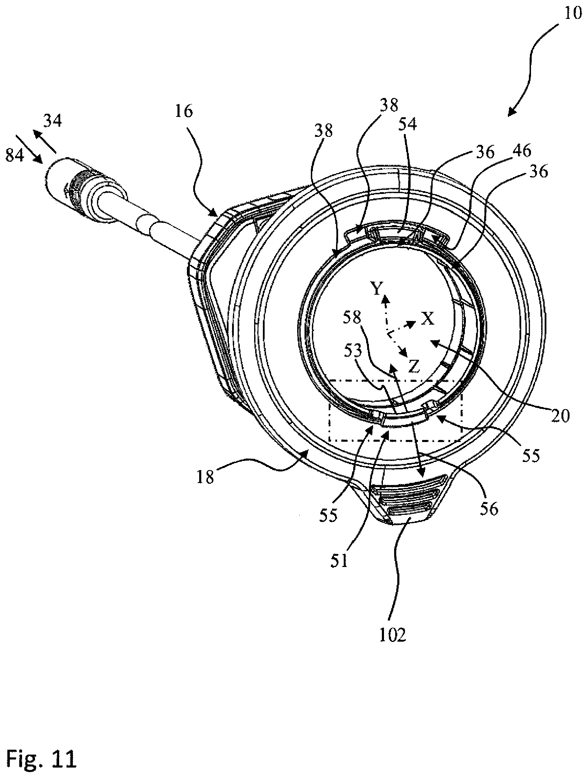

In den Figuren 9 bis 11 ist eine weitere Ausführungsform eines Signalgebers 10 dargestellt. Aufgrund analoger Funktionsweise der Komponenten werden die gleichen Bezugszeichen wie zuvor für die entsprechenden Komponenten verwendet (und nachfolgend insbesondere auf die Unterschiede des Ausführungsform der Figuren 9 bis 11 im Vergleich zu der gemäß Figuren 1 bis 8 eingegangen). Es wird gleichzeitig auf alle drei Figuren 9 bis 11 Bezug genommen. In Figur 10 wurde der Übersichtlichkeit halber und insbesondere zum besseren Verständnis der Merkmale des Basisrings bzw. der ringartigen Geberbasis 16 der in den Figuren 9 und 11 wiederum zu erkennende Bedienring bzw. das ringartige Bedienelement 18 ausgeblendet und weg gelassen.

Der dargestellte vorschlagsgemäße Signalgeber 10 ist hier rein beispielhaft für die Schalteinrichtung 12 des in Figur 1 dargestellten Fahrrads 14 bestimmt und wird mit Bezug auf dieses beschrieben, ohne dass dies beschränkend für den Signalgeber 10 der Erfindung zu verstehen ist.

Der Signalgeber 10 unterscheidet sich im Wesentlichen in zwei Aspekten von dem zuvor beschriebenen, in den Figuren 1 bis 8 dargestellten Signalgeber 10:
So ist beim Signalgeber 10 gemäß Figuren 9 bis 11 vorgesehen, dass die Leitung für Energie 84 und/oder Daten bzw. Gebersignale 34 nicht mehr radial vom Ring abgeht, sondern in axialer Richtung, parallel zur z-Achse (Z). Auf diese Weise verläuft die Leitung in Lenkerrichtung, parallel zur Lenkstange 22, von der ringartigen Geberbasis 16 weg.

Zum anderen ist beim Signalgeber 10 gemäß Figuren 9 bis 11 ein weiterer Schnapphaken 51 vorgesehen, und zwar an einer Unterseite (in Richtung der Y-Achse gesehen), wo bei dem mit der ringartigen Geberbasis 16 (Basisring) interagierenden ringartigen Bedienelement 18 (Bedienring) der Bedienabschnitt 102 vorgesehen ist. Die ringartige Geberbasis 16 weist jenen Schnapphaken 51 auf. Mit seiner Sicherungsnase 53 sorgt der Schnapphaken 51 dafür, dass das angesetzte ringartige Bedienelement 18 nicht mehr ohne Weiteres axial von der ringartigen Geberbasis 16 entfernt werden kann. Der Schnapphaken 51 dient als axiale Sicherung des ringartigen Bedienelements 18, wie es zuvor in den Ausführungsbeispielen der Figuren 1 bis 8 noch in Bezug auf die elastisch gelagerte Sicherungsnase 54 des Führungsabschnitts 36 dargestellt und beschrieben war. Der obere Führungsabschnitt 36 bzw. die obere Sicherungsnase 54 in dem Ausführungsbeispiel der Figuren 9 bis 11 ist nunmehr entgegen dem Ausführungsbeispiel der Figuren 1 bis 8 nicht mehr elastisch gelagert und zwischen einer Sicherungsposition 56 und einer (nur über einen Pfeil 58 angedeuteten) Montageposition 58 verlagerbar. Diese Funktion und Fähigkeit der Verlagerung ist nunmehr (Figuren 9 bis 11) in Bezug auf den unteren Schnapphaken 51 gegeben, etwa indem der Schnapphaken 51 in die Montageposition 58, in der er zumindest abschnittsweise in die Durchgangsöffnung 20 ragt, verlagerbar ist.

Die obere Sicherungsnase 54 bzw. der Führungsabschnitt 36 dient wiederum hauptsächlich nur noch dem Führen der Drehbewegungen in Umfangsrichtungen, um Schaltbefehle oder dergleichen auszugeben, bzw. auch der dritten Bewegungsmöglichkeit des leichten Kippens des Bedienrings gegenüber dem Basisring. In Bezug auf jene drei Schaltbewegungen (Drehen des Bedienabschnitts 102 um die Z-Achse nach links, Drehen nach rechts, Kippen entgegen der Z-Achse nach vorne) kann hinsichtlich der Sicherungsnase 54 der Ausführungsform gemäß Figuren 9 bis 11 auch auf die vorangehende Beschreibung der ausführungsform der Figuren 1 bis 8 verwiesen werden.

In Figur 11 ist der Schnapphaken 51 in Interaktion mit dem angesetzten Bedienring 18 zu erkennen (in Figur 10 ohne Bedienring 18). Die Sicherungsnase 53 des Schnapphakens 51 befindet sich dabei gerade in der Sicherungsposition 56. In der Sicherungsposition 56 ist die Sicherungsnase 53 vollständig außerhalb der Durchgangsöffnung 20 angeordnet. Die Sicherungsnase 53 ist also bezogen auf ihre radiale Position bzw. die entsprechende Y-Koordinate nach außen gedrängt, konkret nach unten entgegen der Y-Achse, wobei jenes Drängen nach außen eben durch die sich durch die Durchgangsöffnung 20 erstreckende Lenkstange 22 verwirklicht werden kann. In der alternativen Montageposition 58 (nicht in Figur 11 bzw. Figur 10 dargestellt, sondern nur über den Pfeil 58 angedeutet) ist die Sicherungsnase 53 wiederum bezüglich ihrer radialen Position bzw. der Y-Koordinate nach innen verlagert, also in Richtung Z-Achse bzw. in Richtung des Zentrums der Durchgangsöffnung 20 verlagert.

Ist die Lenkstange 22 des Fahrrades 14 zudem in der Durchgangsöffnung 20 aufgenommen, so wird bzw. bleibt die Sicherungsnase 53 permanent durch die Lenkstange 22 in die illustrierte Sicherungsposition 56 gedrängt.

Zu der Ausbildung des ringartigen Bedienelements 18 gemäß Ausführungsbeispiel der Figuren 9 bis 11 kann auf die Darstellung und Beschreibung des Bedienrings gemäß Figur 6 verwiesen werden, bzw. in Bezug auf die Elemente des ringartigen Bedienelements 18 auch auf die weiteren Figuren 2 bis 4, 7 und 8.

Zum Ansetzen des ringartigen Bedienelements 18 an die ringartige Geberbasis 16 bei dem Ausführungsbeispiel der Figuren 9 bis 11 wird ebenso vorzugsweise in einem ersten Schritt zunächst die obere Sicherungsnase 54 in die Aussparung 46 eingehängt oder eingeschoben bzw. die Aussparung 46 wird über die obere Sicherungsnase 54 gehängt oder auf diese geschoben. Hierbei kann, bevorzugt zum Einhängen, das ringartige Bedienelement 18 noch leicht gegenüber der ringartigen Geberbasis 16 verkippt werden.

Im Anschluss kann sodann, bevorzugt zum Auf- oder Einschieben des ringartigen Bedienelements 18, die untere Sicherungsnase 53 bzw. der Schnapphaken 51 unten mit dem ringartigen Bedienelement 18, konkret dort mit dem umlaufenden führbaren Abschnitt 38, in Eingriff gebracht werden. Beispielsweise kann dabei auch unterstützend die Sicherungsnase 52 bzw. der Schnapphaken 51 manuell, elastisch in die (in Figur 11 angedeutete) Montageposition 58 gebogen werden. Alternativ kann das ringartige Bedienelement 18 auch gegen die durch die in ihrer Grundposition eben nicht in der Montageposition 58, sondern in der Sicherungsposition 56 befindliche Sicherungsnase 51 ausgeübte Gegenkraft bis an die ringartige Geberbasis 16 herangedrückt werden. Dabei bewegt sich die elastisch nachgiebige Sicherungsnase 53 des unteren Schnapphakens 54 automatisch kurzweilig in ihre Montageposition 58 und schnappt nach Passieren des ringartigen Bedienelements 18 wieder in ihre Sicherungsposition 56 zurück.

Zum Ermöglichen dieser federnden Bewegung der Sicherungsnase 53 in die Montageposition 58 und wieder zurück in die Sicherungsposition 56 ist unterstützend seitlich der Sicherungsnase 53 auf jeder Seite je eine Aussparung 55 vorgesehen. Die Aussparungen 55 sind in dem Führungsabschnitt 36 vorgesehen und sorgen dafür, dass die Sicherungsnase 53 beweglich und in einem gewissen Rahmen biegsam bzw. verschwenkbar ausgebildet ist. Dies ist in Bezug auf das Ausführungsbeispiel gemäß den Figuren 1 bis 8 hinsichtlich der Führungsnase 54 analog eingerichtet. Bei der oberen Führungsnase 54 gemäß der Figuren 9 bis 11 wiederum sind solche Aussparungen 55 nicht vorgesehen.

Nachdem das ringartige Bedienelement 18 an der ringartigen Geberbasis 16 zur Anlage gebracht wurde, beispielsweise durch Anklappen oder Anlegen, wird die Sicherungsnase 53 wieder in die Sicherungsposition 56 zurückfedern gelassen.

In einem weiteren Schritt wird dann die Lenkstange 22 des Fahrrades 14 in die Durchgangsöffnung 20 geführt, wodurch der Führungsabschnitt 36 das ringartige Bedienelement 18 entlang der Längsachse der Durchgangsöffnung 20 bzw. der Z-Achse in der beschriebenen Art und Weise, besonders bevorzugt über die Sicherungsnase 53 des Schnapphakens 51, sichert.

### Bezugszeichenliste

| | | | |
|---|---|---|---|
| 10 | Signalgeber | 68 | Schaltwerk |
| 12 | Schalteinrichtung | | |
| 14 | Fahrrad | | |
| 15 | Fahrer | 70 | weitere ansteuerbare Einrichtung |
| 16 | ringartige Geberbasis (Basisring) | 72 | Beleuchtungseinrichtung |
| 18 | ringartiges Bedienelement (Bedienring) | 74 | Durchgangsöffnung (von 18) |
| | | 76 | Durchgangsöffnung (von 16) |
| 20 | Durchgangsöffnung (gemeinsam | 78 | Klemmschraube |
| | gebildet) | 79 | Fixierungsabschnitt |
| 22 | Lenkstange | 80 | Hall-Spannungs-Kreis |
| 24 | Magnet | 82 | Grund (von 42) |
| 26 | Drehbewegung in die erste | 84 | Energie |
| | Richtung | 86 | Führungsstutzen |
| 28 | Drehbewegung in die zweite | 88 | Seitenwand (von 42) |
| | Richtung | 90 | Innendurchmesser (von 16) |
| 30 | Kippbewegung | 92 | Außendurchmesser |
| 32 | Sensor | 94 | Innendurchmesser (von 18) |
| 34 | Gebersignal | 96 | Anlagefläche |
| 36 | Führungsabschnitt | 98 | Grund (von 44) |
| 38 | führbarer Abschnitt | 100 | Seitenwand (von 44) |
| 40 | Stirnfläche | 102 | Bedienabschnitt |
| 42 | Flachebene | 104 | kragenartiger Abschnitt |
| 44 | Tiefebene | 106 | Außenumfang |
| 46 | Aussparung | | |
| 48 | Steuergerät | X | X-Achse |
| 50 | Steuersignal | Y | Y-Achse |
| 51 | Schnapphaken | Z | Z-Achse |
| 52 | Steuerstrecke | | |
| 53 | Sicherungsnase | x0, y0, z0 | Neutralposition |
| 54 | Sicherungsnase | | |
| 55 | Aussparung | | |
| 56 | Sicherungsposition | | |
| 58 | Montageposition | | |
| 60 | Ansatzfläche | | |
| 62 | erster Anlageabschnitt | | |
| 64 | zweiter Anlageabschnitt | | |
| 66 | keilförmige Aussparung | | |

## Patentansprüche

1. Signalgeber (10) für eine Schalteinrichtung (12) für ein Fahrrad (14), umfassend:
- eine ringartige Geberbasis (16), und
- ein ringartiges Bedienelement (18), das an die ringartige Geberbasis (16) ansetzbar oder angesetzt ist, sodass die ringartige Geberbasis (16) und das ringartige Bedienelement (18) gemeinsam eine Durchgangsöffnung (20) zur Aufnahme einer Lenkstange (22) des Fahrrades (14) bilden,
wobei das ringartige Bedienelement (18) wenigstens einen Magneten (24) aufweist und derart eingerichtet ist, dass das ringartige Bedienelement (18) durch den wenigstens einen Magneten (24) in einer Neutralposition (x₀, y₀, z₀) an der ringartigen Geberbasis (16) haltbar ist oder gehalten wird und dass das ringartige Bedienelement (18), ausgehend von der Neutralposition (x₀, y₀, z₀), zumindest wie folgt bedienbar ist:
- Durchführung einer Drehbewegung (26; 28) des ringartigen Bedienelements (18) relativ zur ringartigen Geberbasis (16) in beliebiger Richtung um eine Längsachse (Z) der Durchgangsöffnung (20), und
- Durchführung einer Kippbewegung (30) des ringartigen Bedienelements (18) relativ zur ringartigen Geberbasis (16),
wobei der Signalgeber (10) ferner wenigstens einen Sensor (32) zur Erzeugung von Gebersignalen (34), die jeweils einer spezifischen Drehbewegung (26; 28) oder Kippbewegung (30) des ringartigen Bedienelements (18) entsprechen, umfasst.

2. Signalgeber (10) nach Anspruch 1, **dadurch gekennzeichnet, dass** die ringartige Geberbasis (16) einen Führungsabschnitt (36) umfasst und das ringartige Bedienelement (18) einen führbaren Abschnitt (38) umfasst, der komplementär zu dem Führungsabschnitt (36) ausgebildet ist, wobei der Führungsabschnitt (36) derart mit dem führbaren Abschnitt (38) in Wechselwirkung steht, wenn das ringartige Bedienelement (18) an die ringartige Geberbasis (16) angesetzt ist, dass wenigstens folgende Bedingung/-en erfüllt ist/sind:
- während der Durchführung der Drehbewegung (26; 28) des ringartigen Bedienelements (18) relativ zur ringartigen Geberbasis (16), ausgehend von der Neutralposition (x₀, y₀, z₀), ist im Wesentlichen keine Kippbewegung (30) möglich, und/oder
- während der Durchführung der Kippbewegung (30) des ringartigen Bedienelements (18) relativ zur ringartigen Geberbasis (16), ausgehend von der Neutralposition (x₀, y₀, z₀), ist im Wesentlichen keine Drehbewegung (26; 28) möglich.

3. Signalgeber (10) nach Anspruch 2, **dadurch gekennzeichnet, dass** der führbare Abschnitt (38) an einer Stirnfläche (40) des ringartigen Bedienelements (18) eine in zwei unterschiedlich tiefen Ebenen (42; 44) verlaufende Aussparung (46) umfasst, wobei die zwei unterschiedlich tiefen Ebenen (42; 44) als eine Flachebene (42) und als eine Tiefebene (44) ausgebildet sind, und wobei der Führungsabschnitt (36) mit der Aussparung (46) derart in Eingriff bringbar oder in Eingriff gebracht ist, dass die Aussparung (46):
- auf der Flachebene (42) die Drehbewegung (26; 28) begrenzt sowie die Kippbewegung (30) verhindert und/oder
- auf der Tiefebene (44) die Drehbewegung (26; 28) verhindert sowie die Kippbewegung (30) begrenzt.

4. Signalgeber (10) nach einem der vorhergehenden Ansprüche, **dadurch gekennzeichnet, dass** die ringartige Geberbasis (16) einen/den Führungsabschnitt (36) umfasst und das ringartige Bedienelement (18) einen/den führbaren Abschnitt (38) umfasst, der komplementär zu dem Führungsabschnitt (36) ausgebildet ist, wobei der Führungsabschnitt (36) derart mit dem führbaren Abschnitt (38) in Wechselwirkung steht, wenn das ringartige Bedienelement (18) an die ringartige Geberbasis (16) angesetzt ist, dass der Führungsabschnitt (36) das ringartige Bedienelement (18) entlang der Längsachse (Z) der Durchgangsöffnung (20) sichert, wenn die Lenkstange (22) des Fahrrades (14) in der Durchgangsöffnung (20) aufgenommen ist.

5. Signalgeber (10) nach Anspruch 4, **dadurch gekennzeichnet, dass** der Führungsabschnitt (36) eine Sicherungsnase (54) umfasst, die zwischen einer Sicherungsposition (56) und einer Montageposition (58) verlagerbar ist, wobei die Sicherungsnase (54) in der Montageposition (58) zumindest abschnittsweise in die Durchgangsöffnung (20) ragt und in der Sicherungsposition (56) vollständig außerhalb der Durchgangsöffnung (20) angeordnet ist, und wobei, wenn das ringartige Bedienelement (18) an die ringartige Geberbasis (16) angesetzt ist und sich die Sicherungsnase (54) in der Sicherungsposition (56) befindet, der führbare Abschnitt (38) entlang der Längsachse (Z) zumindest abschnittsweise zwischen der Sicherungsnase (54) und der ringartigen Geberbasis (16) angeordnet ist, und wobei ferner, wenn das ringartige Bedienelement (18) an die ringartige Geberbasis (16) angesetzt ist und die Lenkstange (22) des Fahrrades (14) in der Durchgangsöffnung (20) aufgenommen ist, die Sicherungsnase (54) durch die Lenkstange (22) in die Sicherungsposition (56) gedrängt ist.

6. Signalgeber (10) nach einem der vorhergehenden Ansprüche, **dadurch gekennzeichnet, dass** in der ringartigen Geberbasis (16) und dem ringartigen Bedienelement (18) jeweils wenigstens ein Magnet (24) derart angeordnet ist, dass durch deren Wechselwirkung das ringartige Bedienelement (18) in der Neutralposition (x₀, y₀, z₀) gehalten wird.

7. Signalgeber (10) nach einem der vorhergehenden Ansprüche, **dadurch gekennzeichnet, dass** der wenigstens eine Sensor (32) als magnetsensitiver Sensor (32) ausgebildet und in der ringartigen Geberbasis (16) angeordnet ist, wobei der magnetsensitive Sensor (32) durch wenigstens einen/den dem ringartigen Bedienelement (18) zugeordneten Magneten (24) zur Erzeugung von spezifischen Gebersignalen (34) anregbar ist, wenn das ringartige Bedienelement (18) ausgehend von der Neutralposition (x₀, y₀, z₀) eine Drehbewegung (26) in eine erste Richtung (26), eine Drehbewegung (28) in eine zweite Richtung (28) oder eine Kippbewegung (30) ausführt.

8. Signalgeber (10) nach einem der vorhergehenden Ansprüche, **dadurch gekennzeichnet, dass** die ringartige Geberbasis (16) zum Ansetzen des ringartigen Bedienelements (18) eine plane Ansatzfläche (60) aufweist und das ringartige Bedienelement (18) einen ersten Anlageabschnitt (62) und einen zweiten Anlageabschnitt (64) umfasst, wobei der erste Anlageabschnitt (62), der zweite Anlageabschnitt (64) und die plane Ansatzfläche (60) derart zusammenwirkend angeordnet sind, dass:
- der erste Anlageabschnitt (62) plan an der Ansatzfläche (60) anliegt und zur Durchführung der Drehbewegung (26; 28) auf der Ansatzfläche (60) gleitet, während der zweite Anlageabschnitt (64) die Ansatzfläche (60) nicht kontaktiert, wenn sich das ringartige Bedienelement (18) in der Neutralposition (x0, y0, z0) befindet, und
- der zweite Anlageabschnitt (64) zur Durchführung der Kippbewegung (30), ausgehend von der Neutralposition (x0, y0, z0), an der Ansatzfläche (60) zur Anlage bringbar ist, während sich der erste Anlageabschnitt (62) von der Ansatzfläche (60) abhebt.

9. Signalgeber (10) nach Anspruch 8, **dadurch gekennzeichnet, dass** zwischen dem zweiten Anlageabschnitt (64) und der Ansatzfläche (60) eine, vorzugsweise keilförmig verlaufende, Aussparung (66) gebildet ist, wenn der erste Anlageabschnitt (62) plan an der Ansatzfläche (60) anliegt.

10. Verfahren zur Montage eines Signalgebers (10) für eine Schalteinrichtung (12) für ein Fahrrad (14) nach einem der vorhergehenden Ansprüche, wobei ein/das ringartiges/ringartige Bedienelement (18) an eine/die ringartige Geberbasis (16) angesetzt wird, sodass die ringartige Geberbasis (16) und das ringartige Bedienelement (18) gemeinsam eine/die Durchgangsöffnung (20) zur Aufnahme einer/der Lenkstange (22) des Fahrrades (14) bilden, wobei das Bedienelement (18) durch wenigstens einen Magneten (24) in eine/die Neutralposition (x₀, y₀, z₀) an der ringartigen Geberbasis (16) gebracht wird.

11. Verfahren nach Anspruch 10, **dadurch gekennzeichnet, dass** die ringartige Geberbasis (16) einen/den Führungsabschnitt (36) umfasst und das ringartige Bedienelement (18) einen/den führbaren Abschnitt (38) umfasst, der komplementär zu dem Führungsabschnitt (36) ausgebildet ist und dass die Lenkstange (22) des Fahrrades (14) in die Durchgangsöffnung (20) geführt wird, wodurch der Führungsabschnitt (36) das ringartige Bedienelement (18) durch Wechselwirkung mit dem führbaren Abschnitt (38) entlang der Längsachse (Z) der Durchgangsöffnung (20) sichert.

12. Verfahren zum Betreiben eines Signalgebers (10) nach einem der Ansprüche 1 bis 9, wobei ein/das ringartiges/ringartige Bedienelement (18) in einer/der Neutralposition (x₀, y₀, z₀) an einer/der ringartigen Geberbasis (16) angesetzt ist und das ringartige Bedienelement (18) aus der Neutralposition (x₀, y₀, z₀) heraus zumindest zur Durchführung einer der folgenden Bewegungen (26; 28; 30) bedient wird:
- Durchführung einer/der Drehbewegung (26) relativ zur ringartigen Geberbasis (16) in eine/die erste Richtung (26) um eine/die Längsachse (Z) einer/der Durchgangsöffnung (20); oder
- Durchführung einer/der Drehbewegung (28) relativ zur ringartigen Geberbasis (16) in eine/die zweite Richtung (28) um eine/die Längsachse (Z) der Durchgangsöffnung (20); oder
- Durchführung einer/der Kippbewegung (30) relativ zur ringartigen Geberbasis (16).

13. Schalteinrichtung (12) für ein Fahrrad (14), umfassend wenigstens:
- einen Signalgeber (10) nach einem der Ansprüche 1 bis 9;
- ein Steuergerät (48) zur Erzeugung von Steuersignalen (50) aus durch den Signalgeber (10) erzeugbaren Gebersignalen (34); und
- eine Steuerstrecke (52).

14. Schalteinrichtung (12) nach Anspruch 13, **dadurch gekennzeichnet, dass** die Steuerstrecke (52) ein Schaltwerk (68) und wenigstens eine weitere ansteuerbare Einrichtung (70) des Fahrrads (14) umfasst, und dass das Steuergerät (48) eingerichtet ist zur:
- Erzeugung eines Steuersignals (50) zum Hochschalten des Schaltwerks (68), aus einem Gebersignal (34), das einer/der Drehbewegung (26) des ringartigen Bedienelements (18) des Signalgebers (10) in eine/die erste Richtung (26) entspricht;
- Erzeugung eines Steuersignals (50) zum Herunterschalten des Schaltwerks (68), aus einem Gebersignal (34), das einer/der Drehbewegung (28) des ringartigen Bedienelements (18) in eine/die zweite Richtung (28) entspricht; und
- Erzeugung eines Steuersignals (50) zum Ansteuern der weiteren ansteuerbaren Einrichtung (70), aus einem Gebersignal (34), das einer/der Kippbewegung (30) des ringartigen Bedienelements (18) entspricht.

15. Fahrrad (14), umfassend eine Schalteinrichtung (12) nach Anspruch 13 oder 14.

## Claims

1. A signaling device (10) for a shifting device (12) for a bicycle (14), comprising:
- a ring-like encoder base (16), and
- a ring-like operating element (18) which can be attached or is attached to the ring-like encoder base (16), so that the ring-like encoder base (16) and the ring-like operating element (18) together form a through-opening (20) for receiving a handlebar (22) of the bicycle (14),
wherein the ring-like operating element (18) has at least one magnet (24) and is arranged such that the ring-like operating element (18) can be held or is held on the ring-like encoder base (16) by the at least one magnet (24) in a neutral position (x₀ , y₀ , z₀ ) and that the ring-like operating element (18), starting from the neutral position (x₀ , y₀ , z₀ ), can be operated at least as follows:
- performing a rotary movement (26; 28) of the ring-like operating element (18) relative to the ring-like encoder base (16) in any direction about a longitudinal axis (Z) of the passage opening (20), and
- performing a tilting movement (30) of the ring-like operating element (18) relative to the ring-like encoder base (16),
wherein the signaling device (10) further comprises at least one sensor (32) for generating encoder signals (34), each of which corresponds to a specific rotary movement (26; 28) or tilting movement (30) of the ring-like operating element (18).

2. The signaling device (10) according to claim 1, **characterized in that** the ring-like encoder base (16) comprises a guide portion (36) and the ring-like operating element (18) comprises a guideable portion (38) which is complementary to the guide portion (36), wherein the guide portion (36) interacts with the guideable portion (38) when the ring-like operating element (18) is attached to the ring-like encoder base (16) such that at least the following condition(s) is/are fulfilled:
- during the execution of the rotary movement (26; 28) of the ring-like operating element (18) relative to the ring-like encoder base (16), starting from the neutral position (x₀ , y₀ , z₀ ), essentially no tilting movement (30) is possible, and/or
- while the tilting movement (30) of the ring-like operating element (18) is being performed relative to the ring-like encoder base (16), starting from the neutral position (x₀ , y₀ , z₀ ), essentially no rotary movement (26; 28) is possible.

3. The signaling device (10) according to claim 2, **characterized in that** the guideable section (38) comprises a recess (46) running in two planes (42; 44) of different depths on an end face (40) of the ring-like operating element (18), the two planes (42; 44) of different depths being designed as a flat plane (42) and as a deep plane (44), and the guide section (36) being engageable or brought into engagement with the recess (46) in such a way that the recess (46):
- limits, on the flat plane (42), the rotary movement (26; 28) and prevents the tilting movement (30) and/or
- prevents, on the deep plane (44), the rotary movement (26; 28) and limits the tilting movement (30).

4. The signaling device (10) according to one of the preceding claims, **characterized in that** the ring-like encoder base (16) comprises a/the guide portion (36) and the ring-like operating element (18) comprises a/the guideable portion (38) which is designed complementary to the guide portion (36), the guide portion (36) interacting with the guideable portion (38) in such a way, when the ring-like operating element (18) is attached to the ring-like encoder base (16), that the guide portion (36) secures the ring-like operating element (18) along the longitudinal axis (Z) of the passage opening (20) when the handlebar (22) of the bicycle (14) is received in the passage opening (20).

5. The signaling device (10) according to claim 4, **characterized in that** the guide section (36) comprises a securing lug (54) which can be displaced between a securing position (56) and a mounting position (58), wherein, in the mounting position (58), the securing lug (54) projects at least partly into the through opening (20) and, in the securing position (56), is arranged completely outside the through opening (20), and wherein, when the ring-like operating element (18) is attached to the ring-like encoder base (16) and the securing lug (54) is located in the securing position (56), the guideable section (38) is arranged along the longitudinal axis (Z) at least partly between the securing lug (54) and the ring-like encoder base (16), and wherein furthermore, when the ring-like operating element (18) is attached to the ring-like encoder base (16) and the handlebar (22) of the bicycle (14) is received in the passage opening (20), the securing lug (54) is urged into the securing position (56) by the handlebar (22).

6. The signaling device (10) according to one of the preceding claims, **characterized in that** at least one magnet (24) is arranged in each of the ring-like encoder base (16) and the ring-like operating element (18) in such a way that the ring-like operating element (18) is held in the neutral position (x₀ , y₀ , z₀ ) by their interaction.

7. The signaling device (10) according to one of the preceding claims, **characterized in that** the at least one sensor (32) is designed as a magnet-sensitive sensor (32) and is arranged in the ring-like encoder base (16), wherein the magnet-sensitive sensor (32) can be stimulated by at least one/the magnet (24) assigned to the ring-like operating element (18) to generate specific encoder signals (34), when the ring-like operating element (18), starting from the neutral position (x₀ , y₀ , z₀ ), executes a rotary movement (26) in a first direction (26), a rotary movement (28) in a second direction (28) or a tilting movement (30).

8. The signaling device (10) according to one of the preceding claims, **characterized in that** the ring-like encoder base (16) has a planar attachment surface (60) for attaching the ring-like operating element (18) and the ring-like operating element (18) comprises a first contact section (62) and a second contact section (64), the first contact section (62), the second contact section (64) and the planar attachment surface (60) being arranged to interact in such a way that:
- the first contact section (62) lies flat against the attachment surface (60) and, in order to perform the rotary movement (26; 28), slides on the attachment surface (60), while the second contact section (64) does not contact the attachment surface (60) when the ring-like operating element (18) is in the neutral position (x0, y0, z0), and
- the second contact section (64) can be brought into contact with the attachment surface (60) to perform the tilting movement (30), starting from the neutral position (x0, y0, z0), while the first contact section (62) lifts off the attachment surface (60).

9. The signaling device (10) according to claim 8, **characterized in that** a recess (66), preferably running in a wedge shape, is formed between the second contact section (64) and the attachment surface (60) when the first contact section (62) lies flat against the attachment surface (60).

10. Method for mounting a signaling device (10) for a shifting device (12) for a bicycle (14) according to one of the preceding claims, wherein a/the ring-like operating element (18) is attached to a/the ring-like encoder base (16), so that the ring-like encoder base (16) and the ring-like operating element (18) together form a/the passage opening (20) for receiving a/the handlebar (22) of the bicycle (14), wherein the operating element (18) is brought into a/the neutral position (x₀ , y₀ , z₀ ) on the ring-like encoder base (16) by at least one magnet (24).

11. A method according to claim 10, **characterized in that** the ring-like encoder base (16) comprises a/the guide portion (36) and the ring-like operating element (18) comprises a/the guideable portion (38) which is complementary to the guide portion (36) and that the handlebar (22) of the bicycle (14) is guided into the passage opening (20), whereby the guide portion (36) secures the ring-like operating element (18) by interacting with the guideable portion (38) along the longitudinal axis (Z) of the passage opening (20).

12. Method for operating a signaling device (10) according to one of claims 1 to 9, wherein a/the ring-like operating element (18) is attached to a/the ring-like encoder base (16) in a/the neutral position (x₀ , y₀ , z₀ ) and the ring-like operating element (18) is operated from the neutral position (x₀ , y₀ , z₀ ) at least for performing one of the following movements (26; 28; 30):
- performing a/the rotary movement (26) relative to the ring-like encoder base (16) in a/the first direction (26) about a/the longitudinal axis (Z) of a/the passage opening (20); or
- performing a/the rotary movement (28) relative to the ring-like encoder base (16) in a/the second direction (28) about a/the longitudinal axis (Z) of the passage opening (20); or
- performing a/the tilting movement (30) relative to the ring-like encoder base (16).

13. Shifting device (12) for a bicycle (14), comprising at least:
- a signaling device (10) according to one of claims 1 to 9;
- a control unit (48) for generating control signals (50) from encoder signals (34) which can be generated by the signaling device (10); and
- a control path (52).

14. The shifting device (12) according to claim 13, **characterized in that** the control path (52) comprises a switchgear (68) and at least one further controllable device (70) of the bicycle (14), and **in that** the control device (48) is set up for:
- generating a control signal (50) for upshifting the switchgear (68), from a encoder signal (34) which corresponds to a/the rotary movement (26) of the ring-like operating element (18) of the signaling device (10) in a/the first direction (26);
- generating a control signal (50) for downshifting the switchgear (68), from an encoder signal (34) which corresponds to a/the rotary movement (28) of the ring-like operating element (18) in a/the second direction (28); and
- generating a control signal (50) for actuating the further controllable device (70), from an encoder signal (34) which corresponds to a/the tilting movement (30) of the ring-like operating element (18).

15. Bicycle (14) comprising a switching device (12) according to claim 13 or 14.

## Revendications

1. Émetteur de signaux (10), destiné à un mécanisme de changement de vitesse (12) d'une bicyclette (14), comprenant :
- une base (16) d'émetteur de forme annulaire, et
- un élément de manipulation (18) de forme annulaire, qui est susceptible de s'appuyer ou qui s'appuie sur la base (16) d'émetteur de forme annulaire, de telle sorte que la base (16) d'émetteur de forme annulaire et l'élément de manipulation (18) de forme annulaire forment ensemble un orifice de passage (20), destiné à recevoir un guidon (22) de la bicyclette (14),
l'élément de manipulation (18) de forme annulaire comportant au moins un aimant (24) et étant configuré de telle sorte, que l'élément de manipulation (18) de forme annulaire soit susceptible d'être maintenu ou soit maintenu par l'au moins un aimant (24) dans une position neutre (x₀, y₀, z₀) sur la base (16) d'émetteur de forme annulaire et qu'en partant de la position neutre (x₀, y₀, z₀), l'élément de manipulation (18) de forme annulaire soit susceptible d'être manipulé au moins de la manière suivante :
- réalisation d'un déplacement en rotation (26 ; 28) de l'élément de manipulation (18) de forme annulaire par rapport à la base (16) d'émetteur de forme annulaire dans une direction quelconque autour d'un axe longitudinal (Z) de l'orifice de passage (20) et
- réalisation d'un déplacement en basculement (30) de l'élément de manipulation (18) de forme annulaire par rapport à la base (16) d'émetteur de forme annulaire,
le générateur de signaux (10) comprenant par ailleurs au moins un capteur (32) destiné à générer des signaux d'émetteur (34), dont chacun correspond à un déplacement en rotation (26 ; 28) ou à un déplacement en basculement (30) spécifique de l'élément de manipulation (18) de forme annulaire.

2. Émetteur de signaux (10) selon la revendication **1**, **caractérisé en ce que** la base (16) d'émetteur de forme annulaire comprend une portion de guidage (36) et l'élément de manipulation (18) de forme annulaire comprend une portion (38) susceptible d'être guidée, qui est conçue de manière complémentaire à la portion de guidage (36), la portion de guidage (36) étant en interaction avec la portion (38) susceptible d'être guidée lorsque l'élément de manipulation (18) de forme annulaire est appuyé sur la base (16) d'émetteur de forme annulaire, de telle sorte qu'au moins la / les condition(s) suivante(s) soi(en)t satisfaite(s) :
- pendant la réalisation du déplacement en rotation (26 ; 28) de l'élément de manipulation (18) de forme annulaire par rapport à la base (16) d'émetteur de forme annulaire, en partant de la position neutre (x₀, y₀, z₀), aucun déplacement en basculement (30) n'est sensiblement possible, et / ou
- pendant la réalisation du déplacement en basculement (30) de l'élément de manipulation (18) de forme annulaire par rapport à la base (16) d'émetteur de forme annulaire, en partant de la position neutre (x₀, y₀, z₀), aucun déplacement en rotation (26 ; 28) n'est sensiblement possible.

3. Émetteur de signaux (10) selon la revendication 2, **caractérisé en ce que** sur une face frontale (40) de l'élément de manipulation (18) de forme annulaire, la portion (38) susceptible d'être guidée comprend une encoche (46) s'écoulant dans deux plans (42 ; 44) de différente profondeur, les deux plans (42 ; 44) de différente profondeur étant conçus en tant qu'un plan plat (42) et un plan profond (44) et la portion de guidage (36) étant susceptible d'être amenée en engagement ou étant amenée en engagement avec l'encoche (46) de telle sorte, que l'encoche (46):
- limite sur le plan plat (42) le déplacement en rotation (26 ; 28) et empêche le déplacement en basculement (30) et / ou
- empêche sur le plan profond (44) le déplacement en rotation (26 ; 28) et limite le déplacement en basculement (30).

4. Émetteur de signaux (10) selon l'une quelconque des revendications précédentes, **caractérisé en ce que** la base (16) d'émetteur de forme annulaire comprend une / la portion de guidage (36) et l'élément de manipulation (18) de forme annulaire comprend une / la portion (38) susceptible d'être guidée, qui est conçue de manière complémentaire à la portion de guidage (36), la portion de guidage (36) étant en interaction avec la portion (38) susceptible d'être guidée lorsque l'élément de manipulation (18) est en appui sur la base (16) d'émetteur, de telle sorte que la portion de guidage (36) bloque l'élément de manipulation (18) de forme annulaire le long de l'axe longitudinal (Z) de l'orifice de passage (20) lorsque le guidon (22) de la bicyclette (14) est réceptionné dans l'orifice de passage (20).

5. Émetteur de signaux (10) selon la revendication 4, **caractérisé en ce que** la portion de guidage (36) comprend un bec de blocage (54) qui est déplaçable entre une position de blocage (56) et une position de montage (58), dans la position de montage (58), le bec de blocage (54) saillant au moins par endroits dans l'orifice de passage (20) et dans la position de blocage (56), étant placé totalement à l'extérieur de l'orifice de passage (20) et lorsque l'élément de manipulation (18) de forme annulaire est en appui sur la base (16) d'émetteur de forme annulaire et le bec de blocage (54) se trouve dans la position de blocage (56), la portion (38) susceptible d'être guidée étant placée le long de l'axe longitudinal (Z) au moins par endroits entre le bec de blocage (54) et la base (16) d'émetteur de forme annulaire et par ailleurs, lorsque l'élément de manipulation (18) de forme annulaire est en appui sur la base (16) d'émetteur de forme annulaire et le guidon (22) de la bicyclette (14) est réceptionné dans l'orifice de passage (20), le bec de blocage (54) étant poussé par le guidon (22) dans la position de blocage (56).

6. Émetteur de signaux (10) selon l'une quelconque des revendications précédentes, **caractérisé en ce que** dans la base (16) d'émetteur de forme annulaire et dans l'élément de manipulation (18) de forme annulaire, chaque fois au moins un aimant (24) est placé de telle sorte que par leur interaction, l'élément de manipulation (18) soit maintenu dans la position neutre (x₀, y₀, z₀).

7. Émetteur de signaux (10) selon l'une quelconque des revendications précédentes, **caractérisé en ce que** l'au moins un capteur (32) est conçu sous la forme d'un capteur (32) magnétosensible et est placé dans la base (16) d'émetteur de forme annulaire, le capteur (32) magnétosensible étant excitable par au moins un / l'aimant (24) associé à l'élément de manipulation (18) de forme annulaire, pour générer des signaux d'émetteur (34) spécifiques, lorsqu'en partant de la position neutre (x₀, y₀, z₀), l'élément de manipulation (18) de forme annulaire réalise un déplacement en rotation (26) dans une première direction (26), un déplacement en rotation (28) dans une deuxième direction (28) ou un déplacement en basculement (30).

8. Émetteur de signaux (10) selon l'une quelconque des revendications précédentes, **caractérisé en ce que** pour mettre en appui l'élément de manipulation (18) de forme annulaire, la base (16) d'émetteur de forme annulaire comprend une surface d'appui (60) et l'élément de manipulation (18) de forme annulaire comprend une première portion d'application (62) et une deuxième portion d'application (64), la première portion d'application (62), la deuxième portion d'application (64) et la surface d'appui (60) plane étant placées en interaction de telle sorte, que :
- la première portion d'application (62) se trouve en application plane sur la surface d'appui (60) et pour la réalisation du déplacement en rotation (26 ; 28), coulisse sur la surface d'appui (60), alors que la deuxième portion d'application (64) n'est pas en contact avec la surface d'appui (60), lorsque l'élément de manipulation (18) de forme annulaire se trouve dans la position neutre (x₀, y₀, z₀) et
- pour le déplacement en basculement (30), en partant de la position neutre (x₀, y₀, z₀), la deuxième portion d'application (64) soit susceptible d'être amenée en application sur la surface d'appui (60), alors que la portion d'application (62) se relève de la surface d'appui (60).

9. Émetteur de signaux (10) selon la revendication 8, **caractérisé en ce qu'**entre la deuxième portion d'application (64) et la surface d'appui (60) est formée une encoche (66), s'écoulant de préférence de manière cunéiforme, lorsque la première portion d'application (62) s'applique de manière plane sur la surface d'appui (60).

10. Procédé, destiné au montage d'un émetteur de signaux (10), destiné à un mécanisme de changement de vitesse (12) d'une bicyclette (14) selon l'une quelconque des revendications précédentes, un / l'élément de manipulation (18) de forme annulaire étant mis en appui sur une / la base (16) d'émetteur de forme annulaire, de telle sorte que la base (16) d'émetteur de forme annulaire et l'élément de manipulation (18) de forme annulaire forment ensemble un / l'orifice de passage (20) pour recevoir un / le guidon (22) de la bicyclette (14), l'élément de manipulation (18) étant amené par au moins un aimant (24) dans une / la position neutre (x₀, y₀, z₀) sur la base (16) d'émetteur de forme annulaire.

11. Procédé selon la revendication 10, **caractérisé en ce que** la base (16) d'émetteur de forme annulaire comprend une / la portion de guidage (36) et l'élément de manipulation (18) de forme annulaire comprend une / la portion (38) susceptible d'être guidée, qui est conçue de manière complémentaire à la portion de guidage (36) et **en ce que** le guidon (22) de la bicyclette (14) est guidé dans l'orifice de passage (20), suite à quoi, par interaction avec la portion (38) susceptible d'être guidée, la portion de guidage (36) bloque l'élément de manipulation (18) le long de l'axe longitudinal (Z) de l'orifice de passage (20).

12. Procédé opérationnel d'un émetteur de signaux (10) selon l'une quelconque des revendications 1 à 9, dans une / la position neutre (x₀, y₀, z₀), un / l'élément de manipulation (18) de forme annulaire étant appuyé sur une / la base (16) d'émetteur de forme annulaire et l'élément de manipulation (18) de forme annulaire étant manipulé à partir de la position neutre ((x₀, y₀, z₀), au moins pour la réalisation de l'un des déplacements (26 ; 28 ; 30) suivants :
- réalisation d'un / du déplacement en rotation (26) par rapport à la base (16) d'émetteur de forme annulaire dans une / la première direction (26) autour d'un / de l'axe longitudinal (Z) d'un / de l'orifice de passage (20) ; ou
- réalisation d'un / du déplacement en rotation (28) par rapport à la base (16) d'émetteur de forme annulaire dans une / la deuxième direction (28) autour d'un / de l'axe longitudinal (Z) de l'orifice de passage (20) ; ou
- réalisation d'un / du déplacement en basculement (30) par rapport à la base (16) d'émetteur de forme annulaire.

13. Mécanisme de changement de vitesse (12) d'une bicyclette (14), comprenant au moins :
- un émetteur de signaux (10) selon l'une quelconque des revendications 1 à 9 ;
- un dispositif de commande (48), destiné à générer des signaux de commande (50) à partir de signaux d'émetteur (34) susceptibles d'être générés par l'émetteur de signaux (10) ; et
- un trajet de commande (52).

14. Mécanisme de changement de vitesse (12) selon la revendication 13, **caractérisé en ce que** le trajet de commande (52) comprend un dérailleur (68) et au moins un autre équipement (70) susceptible d'être activé de la bicyclette (14) et **en ce que** le dispositif de commande (48) est configuré pour :
- générer un signal de commande (50), destiné à faire passer le dérailleur (68) à une vitesse supérieure, à partir d'un signal d'émetteur (34), qui correspond à un / au déplacement en rotation (26) de l'élément de manipulation (18) de forme annulaire de l'émetteur de signaux (10) dans une / la première direction (26) ;
- générer un signal de commande (50), destiné à faire passer le dérailleur (68) à une vitesse inférieure, à partir d'un signal d'émetteur (34), qui correspond à un / au déplacement en rotation (28) de l'élément de manipulation (18) de forme annulaire dans une / la deuxième direction (28) ; et
- générer un signal de commande (50), destiné à activer l'autre équipement (70) susceptible d'être activé, à partir d'un signal d'émetteur (34), qui correspond à un / au déplacement en basculement (30) de l'élément de manipulation (18) de forme annulaire.

15. Bicyclette (14), comprenant un mécanisme de changement de vitesse (12) selon la revendication 13 ou 14.
